(19) Europäisches Patentamt European Patent Office Office européen des brevets

(11) **EP 4 672 842 A1**

(12) **EUROPEAN PATENT APPLICATION**
published in accordance with Art. 153(4) EPC

(43) Date of publication:
**31.12.2025  Bulletin 2026/01**

(21) Application number: **24787910.9**

(22) Date of filing: **26.03.2024**

(51) International Patent Classification (IPC):
*H04W 72/40* (2023.01)

(86) International application number:
**PCT/CN2024/083913**

(87) International publication number:
**WO 2024/212804 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.04.2023  CN 202310405801**

(71) Applicant: **ZTE Corporation**
**Shenzhen, Guangdong  518057 (CN)**

(72) Inventors:
• **CHEN, Jie**
**Shenzhen, Guangdong 518057 (CN)**
• **LU, Youxiong**
**Shenzhen, Guangdong 518057 (CN)**
• **XING, Weimin**
**Shenzhen, Guangdong 518057 (CN)**
• **BI, Feng**
**Shenzhen, Guangdong 518057 (CN)**
• **HU, Yuzhou**
**Shenzhen, Guangdong 518057 (CN)**
• **HE, Haigang**
**Shenzhen, Guangdong 518057 (CN)**

(74) Representative: **Aipex B.V.**
**Vestdijk 51**
**5611 CA Eindhoven (NL)**

(54) **RESOURCE DETERMINATION METHOD, COMMUNICATION DEVICE, AND STORAGE MEDIUM**

(57)     Provided are a resource determination method, a communication device, and a storage medium. The method includes: determining a resource conflict condition between a second resource set corresponding to each candidate transmission resource in a first resource set and a fourth resource set corresponding to each sensing resource in a third resource set; where the first resource set includes at least one candidate transmission resource used by a first access technology within a resource selection window, and the third resource set includes at least one sensing resource used by a second access technology within a resource sensing window; and excluding a candidate transmission resource from the first resource set according to the resource conflict condition.

Determine a resource conflict condition between a second resource set corresponding to each candidate transmission resource in a first resource set and a fourth resource set corresponding to each sensing resource in a third resource set — S310

Exclude a candidate transmission resource from the first resource set according to the resource conflict condition — S320

**FIG. 3**

**Description**

TECHNICAL FIELD

The present application relates to the field of communications and in particular, to a resource determination method, a communication device, and a storage medium.

BACKGROUND

The 3rd Generation Partnership Project (3GPP) Release 18 (R18) has discussed the coexistence of intra-band Long Term Evolution (LTE) and New Radio (NR) and specifically prioritizes the scenario of coexistence between NR R18 dual-mode user equipments (UEs) and LTE Sidelink (SL) UEs. An NR dual-mode UE refers to a UE equipped with both an NR module and an LTE module. During coexistence, when an R18 dual-mode UE performs sensing resource selection in Mode 2 (that is, the UE autonomous determination mode), the reserved resources of both other NR SL UEs and other LTE SL UEs must be considered. However, in the existing NR protocol, the description of the reserved resource location for a received data is inconsistent between the NR and LTE protocols. For example, NR resource reservation is based on slots in a resource pool, whereas LTE resource reservation is not based on the slots in the resource pool. Therefore, during Mode 2 resource selection, the NR module, in addition to performing resource selection based on the reserved resources of other NR SL UEs in the related art, also needs to perform resource exclusion based on LTE reserved resources according to the LTE resource reservation period. Furthermore, since LTE UEs cannot recognize NR SL transmission, to prevent conflicts in the time domain between the NR physical sidelink feedback channel (PSFCH) and LTE UE transmission, which could cause automatic gain control (AGC) issues at the receiving side of the LTE UEs, the NR UE also needs to perform resource selection based on the reserved resources of the LTE UEs to avoid conflicts between the PSFCH and LTE SL transmission.

SUMMARY

In view of the above, embodiments of the present application provide a resource determination method, a communication device, and a storage medium to avoid conflicts between candidate transmission resources corresponding to a module applying a first access technology and sensing resources corresponding to a module applying a second access technology.

The embodiments of the present application provide a resource determination method. The resource determination method is applied by a first communication device and includes the following.

A resource conflict condition between a second resource set corresponding to each candidate transmission resource in a first resource set and a fourth resource set corresponding to each sensing resource in a third resource set is determined, where the first resource set includes at least one candidate transmission resource used by a first access technology within a resource selection window, and the third resource set includes at least one sensing resource used by a second access technology within a resource sensing window.

A candidate transmission resource is excluded from the first resource set according to the resource conflict condition.

The embodiments of the present application provide a resource determination apparatus. The resource determination apparatus is applied by a first communication device and includes a determination module and a screening module.

The determination module is configured to determine a resource conflict condition between a second resource set corresponding to each candidate transmission resource in a first resource set and a fourth resource set corresponding to each sensing resource in a third resource set, where the first resource set includes at least one candidate transmission resource used by a first access technology within a resource selection window, and the third resource set includes at least one sensing resource used by a second access technology within a resource sensing window.

The screening module is configured to exclude a candidate transmission resource from the first resource set according to the resource conflict condition.

The embodiments of the present application provide a communication device. The communication device includes a memory and at least one processor.

The memory is configured to store at least one program.

When executed by the at least one processor, the at least one program causes the at least one processor to perform the method described in the preceding embodiment.

The embodiments of the present application provide a storage medium storing a computer program which, when executed by a processor, causes the processor to perform the method described in the preceding embodiment.

BRIEF DESCRIPTION OF DRAWINGS

FIG. 1 is a schematic diagram of a sidelink communication in the related art;

FIG. 2 is a schematic diagram of a process of autonomously selecting resources by a UE under two types of radio access technologies (RATs) in the related art;

FIG. 3 is a flowchart of a resource determination method according to an embodiment of the present application;

FIG. 4 is a block diagram of a resource determination apparatus according to an embodiment of the present application; and

FIG. 5 is a structure diagram of a communication device according to an embodiment of the present application.

DETAILED DESCRIPTION

Embodiments of the present application are described below in conjunction with drawings. The present application is described below in conjunction with embodiments and the drawings. The embodiments described below are intended to explain the present application and not to limit the scope of the present application.

Direct communication may also be referred to as sidelink (SL) communication or short-range communication. In the following description, SL communication will be used to represent direct communication. Sidelink still employs the same synchronization frame structure as the cellular network. In the related art, one radio frame is 10 milliseconds (ms) long and contains ten 1-ms subframes. Depending on the numerology, one sub-frame contains a number of slots. Numerology may be understood as a set of parameters, specifically referring to signal parameters such as sub-carrier spacing (SCS) and cyclic prefix (CP) length. Hereinafter, the terms SCS and numerology will not be strictly distinguished. For example, the SCS in LTE is fixed at 15 kHz. However, for NR, the SCS may be $\Delta f = 2^{\mu} \cdot 15[kHz]$, where $\mu = 0, 1, 2 ..., 5$. Different SCSs correspond to different symbol lengths. The frame structures for normal CPs may be summarized in Table 1, where $N_{symb}^{slot}$ denotes the number of symbols contained in each slot (this value is 12 for the extended CP), $N_{slot}^{frame,\mu}$ denotes the number of slots contained in each frame, and $N_{slot}^{subframe,\mu}$ denotes the number of slots contained in each subframe.

Table 1

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

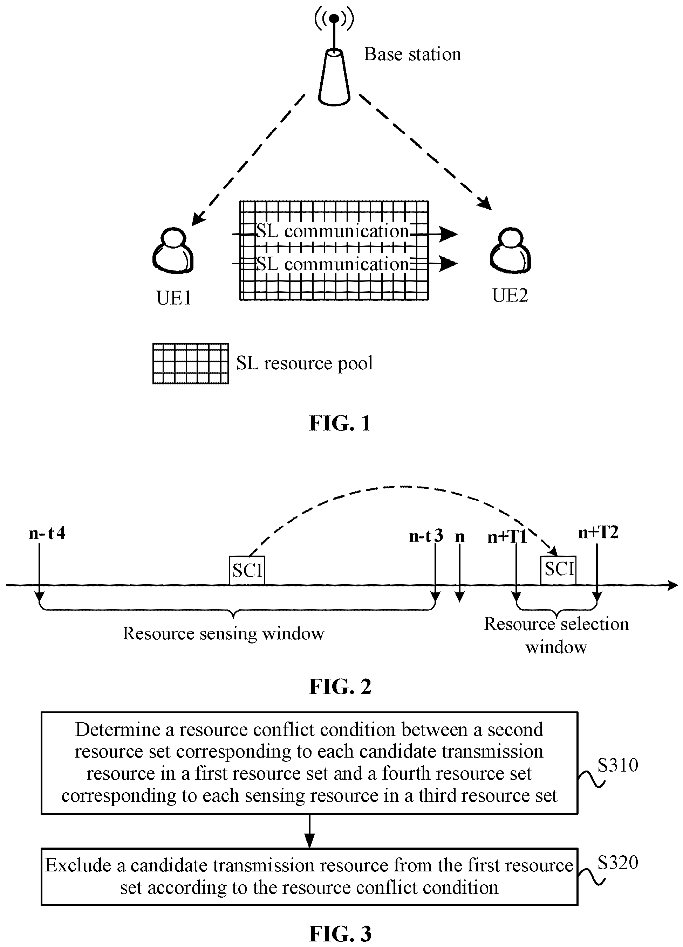

FIG. 1 is a schematic diagram of a sidelink communication in the related art. As shown in FIG. 1, both the UE1 and the UE2 are SL UEs. The UE1 and the UE2 communicate with each other based on an SL resource pool without the need for a base station to forward data.

The SL resource scheduling is categorized into two modes: the scheduling mode and the UE autonomous determination mode. The scheduling mode refers to a mode where the physical resources for communication between UEs are determined based on indications from a base station. The UE autonomous determination mode refers to a mode where the physical resources for communication between UEs are autonomously determined by the transmitting UE itself. In the UE autonomous determination mode, the methods for the UE to autonomously determine transmission resources include non-base-station-scheduled approaches such as physical layer sensing performed by the transmitting UE, receiving cooperative information from other UEs, and random selection at the medium access control (MAC) layer.

The existing sidelink radio access technology (SL RAT) may be categorized into two types: NR radio access technology (RAT) and LTE RAT. FIG. 2 is a schematic diagram of a process of autonomously selecting resources by a UE under two types of RATs in the related art. As shown in FIG. 2, in a case where resource selection is triggered by a higher layer at the time n, the SL UE excludes potential high-interference resources within the resource selection window according to SL transmission from other UEs within the resource sensing window before the time n and selects one or more resources for future data transmission from the remaining available candidate resources within the resource selection window.

LTE and NR are slightly different in the process of resource reservation indication and exclusion.

Specifically, for an LTE UE, in a case where the UE receives sidelink control information (SCI) in the subframe $t_m^{SL}$ within the resource sensing window, the reference signal received power (RSRP) of the data associated with the SCI is greater than a certain threshold, and the UE determines, according to the indication information in the SCI, that the SCI reserves one or more resources in the subframe $t_{m+q*P_{step}*P_{rsvp\_RX}}^{SL}$ at the time $t_m^{SL}$, then the UE, when selecting resources at the time n, needs to exclude candidate transmission resources that conflict with the reserved resources in the subframe $t_{m+q*P_{step}*P_{rsvp\_RX}}^{SL}$, where $t_m^{SL}$ denotes a subframe in ( $t_0^{SL}, t_1^{SL}, ..., t_{max}^{SL}$ ), and $0 \leq t_i^{SL} < 10240$.

The subframe indices are relative to a system frame number 0 (SFN0) or a direct frame number 0 (DFN0), and are ( $t_1^{SL}, t_1^{SL}, ..., t_{T_{max}}^{SL}$ ) formed by sorting remaining resources in ascending order, where the remaining resources are obtained by excluding downlink subframes, special subframes, synchronization signal/physical broadcast channel block (SSB) subframes, and reserved subframes from subframes 0 to 10239.

It can be seen that in LTE resource reservation, the resources reserved in $t_m^{SL}$ may be on subframes either inside or outside the resource pool.

For an NR SL UE, in a case where the UE receives SCI in the slot $t'_m^{SL}$ within the resource sensing window, the RSRP of the data associated with the SCI is greater than a certain threshold, and the UE determines, according to the indication information in the SCI, that the SCI reserves one resource in the slot $t'_{m+q*P'_{rsvp\_RX}}^{SL}$ within the resource selection window at the time $t'_m^{SL}$, then the UE, when selecting resources at the time n, needs to exclude candidate resources that overlap with the resource reserved in the slot $t'_{m+q*P'_{rsvp\_RX}}^{SL}$, where $t'_m^{SL}$ refers to one slot in the resource pool from the slot 0 to the slot 10240 * 2^μ - 1, and the value of m is {0, 1, ... , $T'_{max}$ - 1}.

First, the NR UE determines $t_m^{SL}$ from the slot 0 to the slot 10240 * 2^μ - 1, where

$$0 \leq t_i^{SL} < 10240 \times 2^{\mu}, 0 \leq i < T_{max}.$$

The slot indices are relative to the slot 0 in SFN0 or the slot 0 in DFN0, and are ( $t_0^{SL}, t_1^{SL}, ..., t_{T_{max}}^{SL}$ ) formed by excluding downlink slots, special slots, SSB slots, and reserved slots from slots 0 to 10240 * 2^μ - 1 and then sorting the remaining resources in ascending order.

Further, the resource $t'_m^{SL}$ in the resource pool is determined from ( $t_0^{SL}, t_1^{SL}, ..., t_{T_{max}}^{SL}$ ) according to a resource pool bit mapping rule, where the value of *m* is {0, 1, ... , $T'_{max}$ - 1}.

It can be seen that in NR SL UE resource reservation, the resources reserved in $t'_{m+q*P'_{rsvp\_RX}}^{SL}$ must be on subframes in the resource pool.

In an embodiment, FIG. 3 is a flowchart of a resource determination method according to an embodiment of the present application. This embodiment is applied to the scenario of performing resource exclusion based on candidate transmission resources used by a first access technology. This embodiment may be executed by a first communication device. For example, the first communication device may include a module applying a first access technology and a module applying a second access technology, or the first communication device may include only a module applying a first access technology. For example, the first access technology may be the NR technology, and the second access technology may be the LTE technology.

As shown in FIG. 3, this embodiment includes S310 and S320.

In S310, a resource conflict condition between a second resource set corresponding to each candidate transmission resource in a first resource set and a fourth resource set corresponding to each sensing resource in a third resource set is determined.

The first resource set includes at least one candidate transmission resource used by the first access technology within a resource selection window, and the third resource set includes at least one sensing resource used by the second access technology within a resource sensing window.

In S320, a candidate transmission resource is excluded from the first resource set according to the resource conflict condition.

In this embodiment, the number of second resource sets is equal to the number of candidate transmission resources included in the first resource set, that is, each candidate transmission resource corresponds to one second resource set; the number of fourth resource sets is equal to the number of sensing resources included in the third resource set, that is, each sensing resource corresponds to one fourth resource set. A corresponding second resource set is determined for each candidate transmission resource in the first resource set, and a corresponding fourth resource set is determined for each sensing resource in the third resource set; in a case where any resource in the second resource set conflicts with any resource in the fourth resource set, the candidate transmission resource corresponding to the second resource set is excluded from the first resource set.

In an embodiment, the sensing resource includes: a received transmission resource used by the second access technology or a hypothetical transmission resource used by the second access technology.

The second resource set includes a candidate transmission resource and a first number of periodically reserved resources corresponding to the candidate transmission resource.

The fourth resource set includes a second number of periodically reserved resources corresponding to a sensing resource.

In an embodiment, the determined resource conflict condition between the second resource set corresponding to each candidate transmission resource in the first resource set and the fourth resource set corresponding to each sensing resource in the third resource set includes one of the following: a resource conflict condition between any resource in the second resource set and any resource in the fourth resource set; or a resource conflict condition between a specific resource associated with any resource in the second resource set and any resource in the fourth resource set.

In an embodiment, the specific resource may be determined according to at least one of the following: a predefined rule, a dynamic indication, a configured rule or a pre-configured rule. In an embodiment, the specific resource may include one of the following: a feedback resource, a reference signal resource, a data resource or a control resource. In an embodiment, the number of specific resources may be one or multiple, which is not limited thereto. In an embodiment, whether any resource in the second resource set conflicts with any resource in the fourth resource set is decided or whether a specific resource associated with any resource in the second resource set conflicts with any resource in the fourth resource set is decided, and if a conflict occurs, the candidate transmission resource corresponding to the second resource set is excluded from the first resource set.

In an embodiment, the resource conflict condition includes at least one of the following: a time-frequency resource location corresponding to any resource in the second resource set overlaps with a time-frequency resource location corresponding to any resource in the fourth resource set; a time-domain resource location corresponding to any resource in the second resource set overlaps with a time-domain resource location corresponding to any resource in the fourth resource set; a time-frequency resource location of the specific resource associated with any resource in the second resource set overlaps with a time-frequency resource location corresponding to any resource in the fourth resource set; a time-domain resource location of the specific resource associated with any resource in the second resource set overlaps with a time-domain resource location corresponding to any resource in the fourth resource set; an RSRP of a sensing resource corresponding to the fourth resource set is greater than a first threshold; or a received signal strength indicator (RSSI) of a sensing resource corresponding to the fourth resource set is greater than a second threshold.

In an embodiment, when the SCI used by the second access technology is received, in a case where the time-frequency resource location corresponding to any resource in the second resource set overlaps with the time-frequency resource location corresponding to any resource in the fourth resource set and the RSRP of a sensing resource corresponding to the fourth resource set is greater than the first threshold, the candidate transmission resource corresponding to the second resource set is then excluded from the first resource set.

In an embodiment, when the SCI used by the second access technology is received, in a case where the time-frequency resource location corresponding to any resource in the second resource set overlaps with the time-frequency resource location corresponding to any resource in the fourth resource set and the RSSI of a sensing resource corresponding to the fourth resource set is greater than the second threshold, the candidate transmission resource corresponding to the second resource set is then excluded from the first resource set.

In an embodiment, when the hypothetical SCI used by the second access technology is received, in a case where the time-domain resource location corresponding to any resource in the second resource set overlaps with the time-domain resource location corresponding to any resource in the fourth resource set, the candidate transmission resource corresponding to the second resource set is then excluded from the first resource set.

In an embodiment, when the SCI used by the second access technology is received, in a case where the time-frequency resource location of the specific resource associated with any resource in the second resource set overlaps with the time-frequency resource location corresponding to any resource in the fourth resource set, the candidate transmission resource corresponding to the second resource set is then excluded from the first resource set.

In an embodiment, when the SCI used by the second access technology is received, in a case where the time-frequency resource location of the specific resource associated with any resource in the second resource set overlaps with the time-frequency resource location corresponding to any resource in the fourth resource set and the RSRP of a sensing resource corresponding to the fourth resource set is greater than the first threshold, the candidate transmission resource corresponding to the second resource set is then excluded from the first resource set.

In an embodiment, when the SCI used by the second access technology is received, in a case where the time-frequency resource location of the specific resource associated with any resource in the second resource set overlaps with the time-frequency resource location corresponding to any resource in the fourth resource set and the RSSI of a sensing resource corresponding to the fourth resource set is greater than the second threshold, the candidate transmission resource corresponding to the second resource set is then excluded from the first resource set.

In an embodiment, when the hypothetical SCI used by the second access technology is received, in a case where the time-domain resource location of the specific resource associated with any resource in the second resource set overlaps with the time-domain resource location corresponding to any resource in the fourth resource set, the candidate transmission resource corresponding to the second resource set is then excluded from the first resource set.

In an embodiment, in a case where the specific resource is a feedback resource, data transmission on a candidate transmission resource enables hybrid automatic repeat request (HARQ) feedback.

In an embodiment, the resource in the second resource set is determined based on a slot in a resource pool used by the first access technology.

The resource in the fourth resource set is determined based on a logical subframe used by the second access technology.

In an embodiment, the resources in the second resource set are on subframes inside the resource pool, and the resources in the fourth resource set may be on subframes either inside or outside the resource pool.

In an embodiment, in a case where a first preset condition is met, the number Q of resources included in the fourth resource set is determined by $P_{LTE\_rsvp\_RX}$; otherwise, Q = 1; where $P_{LTE\_rsvp\_RX}$ denotes the value of a resource periodic reservation field indicated in SCI sent by applying the second access technology and received in a subframe m, where m denotes a logical subframe index within a system frame period for a subframe of received data used by the second access technology. The system frame may include a system frame number (SFN) and a direct frame number (DFN).

In an embodiment, the first preset condition includes one of the following.

The SCI sent by applying the second access technology is received in the subframe m, the module applying the first access technology is configured or pre-configured with full sensing, $P_{LTE\_rsvp\_RX} < 1$, and $n' - m \le P_{step} * P_{LTE\_rsvp\_RX}$; where in a case where a slot n is included in ( $t_{LTE\_0}^{SL}, t_{LTE\_1}^{SL}, \cdots, t_{LTE\_T_{max}}^{SL}$ ), $n'$ corresponds to the same logical subframe as n, and otherwise, $n'$ is the first logical subframe after the slot n in ( $t_{LTE\_0}^{SL}, t_{LTE\_1}^{SL}, \cdots, t_{LTE\_T_{max}}^{SL}$ ) within the system frame period, where ( $t_{LTE\_0}^{SL}, t_{LTE\_1}^{SL}, \cdots, t_{LTE\_T_{max}}^{SL}$ ) denotes logical subframes when the second access technology is applied within the system frame period.

The SCI sent by applying the second access technology is received in the subframe m, the module applying the first access technology is configured or pre-configured with full sensing, $P_{LTE\_rsvp\_RX} < 1$, and $n'-m \le P_{step} * P_{LTE\_rsvp\_RX}$; where in a case where the slot n is included in ( $t'^{SL}_0, t'^{SL}_1, \ldots, t'^{SL}_{T'_{max}-1}$ ), n' corresponds to the same slot as n, and otherwise, n' is the first slot after the slot n in ( $t'^{SL}_0, t'^{SL}_1, \ldots, t'^{SL}_{T'_{max}-1}$ ) within the system frame period, where ( $t'^{SL}_0, t'^{SL}_1, \ldots, t'^{SL}_{T'_{max}-1}$ ) denotes slots in the resource pool when the first access technology is applied within the system frame period.

The SCI sent by applying the second access technology is received in the subframe m, the module applying the first access technology is configured or pre-configured with partial sensing, $P_{LTE\_rsvp\_RX} < 1$, and $n' - m \le P_{step} * P_{LTE\_rsvp\_RX} + P_{step}$; where $P_{step}$ denotes a system-configured, pre-configured or pre-defined parameter when the second access technology is applied, and $n'$ is the last subframe among subframes consisting of Y and Y', where the subframes consisting of Y and Y' are part subframes within the resource selection window.

In an embodiment, in a case where a second preset condition is met, the number Q of resources included in the fourth resource set is determined by $k$; otherwise, Q = 1; where $k$ denotes all available periodically reserved values in a resource pool configured by a system applying the second access technology or all available periodically reserved values in a pre-configured resource pool.

In an embodiment, the second preset condition includes one of the following.

No monitoring is performed in the subframe m, the module applying the first access technology is configured or pre-configured with full sensing, k < 1, and $n' - m \leq P_{step} * k$; where in a case where the slot n is included in ( $t^{SL}_{LTE\_0}, t^{SL}_{LTE\_1}, \ldots, t^{SL}_{LTE\_T_{max}}$ ), $n'$ corresponds to the same logical subframe as n, and otherwise, $n'$ is the first logical subframe after the slot n in ( $t^{SL}_{LTE\_0}, t^{SL}_{LTE\_1}, \ldots, t^{SL}_{LTE\_T_{max}}$ ) within the system frame period, where ( $t^{SL}_{LTE\_0}, t^{SL}_{LTE\_1}, \ldots, t^{SL}_{LTE\_T_{max}}$ ) denotes logical subframes when the second access technology is applied within the system frame period.

No monitoring is performed in the subframe m, the module applying the first access technology is configured or pre-configured with full sensing, k < 1, and $n' - m \leq P_{step} * k$; where in a case where the slot n is included in ( $t'^{SL}_0, t'^{SL}_1, \ldots, t'^{SL}_{T'_{max}-1}$ ), $n'$ corresponds to the same slot as n, and otherwise, $n'$ is the first slot after the slot n in ( $t'^{SL}_0, t'^{SL}_1, \ldots, t'^{SL}_{T'_{max}-1}$ ) within the system frame period, where ( $t'^{SL}_0, t'^{SL}_1, \ldots, t'^{SL}_{T'_{max}-1}$ ) denotes slots in the resource pool when the first access technology is applied within the system frame period.

No monitoring is performed in the subframe m, the module applying the first access technology is configured or pre-configured with partial sensing, $k < 1$, and $n' - m \leq P_{step} * k + P_{step}$; where $n'$ is the last subframe among subframes consisting of $Y$ and $Y'$, where the subframes consisting of $Y$ and $Y'$ are part subframes within the resource selection window; $P_{step}$ denotes a system-configured, pre-configured or pre-defined parameter when the second access technology is applied; $m$ denotes a logical subframe index within the system frame period for a subframe of received data used by the second access technology; in a case where the slot n is included in ( $t^{SL}_{LTE\_0}, t^{SL}_{LTE\_1}, \ldots, t^{SL}_{LTE\_Tmax}$ ), n' corresponds to the same logical subframe as n, and otherwise, $n'$ is the first logical subframe after the slot n in ( $t^{SL}_{LTE\_0}, t^{SL}_{LTE\_1}, \ldots, t^{SL}_{LTE\_Tmax}$ ) within the system frame period, where ( $t^{SL}_{LTE\_0}, t^{SL}_{LTE\_1}, \ldots, t^{SL}_{LTE\_Tmax}$ ) denotes logical subframes when the second access technology is applied within the system frame period.

No monitoring is performed in the subframe m, the module applying the first access technology is configured or pre-configured with partial sensing, $k < 1$, and $n' - m \leq P_{step} * k + P_{step}$; where $n'$ is the last subframe among subframes consisting of $Y$ and $Y'$, where the subframes consisting of $Y$ and $Y'$ are part subframes within the resource selection window; $P_{step}$ denotes a system-configured, pre-configured or pre-defined parameter when the second access technology is applied; $m$ denotes a logical subframe index within the system frame period for a subframe of received data used by the second access technology; in a case where the slot n is included in ( $t'^{SL}_0, t'^{SL}_1, \ldots, t'^{SL}_{T'_{max}-1}$ ), n' corresponds to the same slot as n, and otherwise, n' is the first slot after the slot n in ( $t'^{SL}_0, t'^{SL}_1, \ldots, t'^{SL}_{T'_{max}-1}$ ) within the system frame period, where ( $t'^{SL}_0, t'^{SL}_1, \ldots, t'^{SL}_{T'_{max}-1}$ ) denotes slots in the resource pool when the first access technology is applied within the system frame period.

In an embodiment, in a case where a third preset condition is met, the number $Q$ of resources included in the fourth resource set is determined by $P_{LTE\_rsvp\_RX}$ and $T_{scal}$; otherwise, $Q = 1$; where $P_{LTE\_rsvp\_RX}$ denotes the value of a resource periodic reservation field indicated in the SCI sent by applying the second access technology and received in the subframe m, where m denotes a logical subframe index within the system frame period for a subframe of received data used by the second access technology; and $T_{scal}$ denotes the millisecond value corresponding to a resource selection window size.

In an embodiment, the third preset condition includes one of the following.

SCI sent by applying the first access technology is received in the subframe m, $100 * P_{LTE\_rsvp\_RX} < T_{scal}$, and n' - m $\leq P'_{rsvp\_RX}$; where $P'_{rsvp\_RX}$ denotes the value of a logical slot corresponding to the module applying the first access technology, converted from a period corresponding to a value indicated by a resource reservation field in the SCI sent by applying the second access technology and received in the subframe m; in a case where the slot n is included in ( $t^{SL}_{LTE\_0}, t^{SL}_{LTE\_1}, \ldots, t^{SL}_{LTE\_Tmax}$ ), n' corresponds to the same logical subframe as n, and otherwise, n' is the first logical subframe after the slot n in ( $t^{SL}_{LTE\_0}, t^{SL}_{LTE\_1}, \ldots, t^{SL}_{LTE\_Tmax}$ ) within the system frame period, where ( $t^{SL}_{LTE\_0}, t^{SL}_{LTE\_1}, \ldots, t^{SL}_{LTE\_Tmax}$ ) denotes logical subframes when the second access technology is applied within the system frame period.

The SCI sent by applying the first access technology is received in the subframe m, $100 * P_{LTE\_rsvp\_RX} < T_{scal}$, and $n' - m \leq P'_{rsvp\_RX}$; where $P'_{rsvp\_RX}$ denotes the value of a logical slot corresponding to the module applying the first access technology, converted from a period corresponding to a value indicated by a resource reservation field in the SCI sent by applying the second access technology and received in the subframe m; in a case where the slot n is included in ( $t'^{SL}_0, t'^{SL}_1, \ldots, t'^{SL}_{T'max-1}$ ), n' corresponds to the same slot as n, and otherwise, n' is the first slot after the slot n in ( $t'^{SL}_0, t'^{SL}_1, \ldots, t'^{SL}_{T'max-1}$ ) within the system frame period, where ( $t'^{SL}_0, t'^{SL}_1, \ldots, t'^{SL}_{T'max-1}$ ) denotes slots in the resource pool when the first access technology is applied within the system frame period.

In an embodiment, in a case where a fourth preset condition is met, the number Q of resources included in the fourth resource set is determined by K and $T_{scal}$; otherwise, Q = 1; where K denotes all available periodically reserved values in a resource pool configured by the hypothetical system applying the second access technology or a pre-configured resource pool in an unmonitored subframe m.

In an embodiment, the fourth preset condition includes one of the following.

No monitoring is performed in the subframe m, $100 * K < T_{scal}$, and $n' - m \leq P'_{rsvp\_RX}$; where K denotes all the available periodically reserved values in the resource pool configured by the hypothetical system applying the second access technology or the pre-configured resource pool in the unmonitored subframe m; $P'_{rsvp\_RX}$ denotes the value of a logical slot corresponding to the module applying the first access technology, converted from a period corresponding to a periodically reserved value in the system applying the second access technology; in a case where the slot n is included in ( $t'^{SL}_0, t'^{SL}_1, \ldots, t'^{SL}_{T'max-1}$ ), n' corresponds to the same slot as n, and otherwise, n' is the first slot after the slot n in ( $t'^{SL}_0, t'^{SL}_1, \ldots, t'^{SL}_{T'max-1}$ ) within the system frame period, where ( $t'^{SL}_0, t'^{SL}_1, \ldots, t'^{SL}_{T'max-1}$ ) denotes slots in the resource pool when the first access technology is applied within the system frame period

No monitoring is performed in the subframe m, $100 * K < T_{scal}$, and $n' - m \leq P'_{rsvp\_RX}$; where K denotes all the available periodically reserved values in the resource pool configured by the hypothetical system applying the second access technology or the pre-configured resource pool in the unmonitored subframe m; $P'_{rsvp\_RX}$ denotes the value of a logical slot corresponding to the module applying the first access technology, converted from a period corresponding to a periodically reserved value in the system applying the second access technology; in the case where the slot n is not included in ( $t^{SL}_{LTE\_0}, t^{SL}_{LTE\_1}, \ldots, t^{SL}_{LTE\_Tmax}$ ) n' corresponds to the same logical subframe as n, and otherwise, n' is the first logical subframe after the slot n in ( $t^{SL}_{LTE\_0}, t^{SL}_{LTE\_1}, \ldots, t^{SL}_{LTE\_Tmax}$ ) within the system frame period, where ( $t^{SL}_{LTE\_0}, t^{SL}_{LTE\_1}, \ldots, t^{SL}_{LTE\_Tmax}$ ) denotes logical subframes when the second access technology is applied within the system frame period.

In an embodiment, in a case where a fifth preset condition is met, the number Q of resources included in the fourth resource set is determined by $P_{LTE\_rsvp\_RX}$, $T_{scal}$, and a first preset value; otherwise, Q = 1; where $P_{LTE\_rsvp\_RX}$ denotes the value of a resource periodic reservation field indicated in the SCI sent by applying the second access technology and received in the subframe m, where m denotes a logical subframe index within the system frame period for a subframe of received data used by the second access technology; and $T_{scal}$ denotes a millisecond value corresponding to a resource selection window size.

In an embodiment, the fifth preset condition includes one of the following.

The SCI sent by applying the second access technology is received in the subframe m, $100 * P_{LTE\_rsvp\_RX} < max(100\ ms, T_{scal})$, and $n' - m \leq P'_{rsvp\_RX}$; where $P_{LTE\_rsvp\_RX}$ denotes the value corresponding to a resource periodic reservation field in the SCI sent by applying the second access technology and received in the subframe m; $P'_{rsvp\_RX}$ denotes the value of a logical slot corresponding to the module applying the first access technology, converted from a period corresponding to a value indicated by a resource reservation field in the SCI; in a case where the slot n is included in ( $t'^{SL}_0, t'^{SL}_1, \ldots, t'^{SL}_{T'max-1}$ ), n' corresponds to the same slot as n, and otherwise, n' is the first slot after the slot n in ( $t'^{SL}_0, t'^{SL}_1, \ldots, t'^{SL}_{T'max-1}$ ) within the system frame period, where ( $t'^{SL}_0, t'^{SL}_1, \ldots, t'^{SL}_{T'max-1}$ ) denotes slots in the resource pool when the first access technology is applied within the system frame period.

The SCI sent by applying the second access technology is received in the subframe m, $100 * P_{LTE\_rsvp\_RX} < max(100\ ms, T_{scal})$, and $n' - m \leq P'_{rsvp\_RX}$; where $P_{LTE\_rsvp\_RX}$ denotes the value corresponding to a resource periodic reservation field in the SCI sent by applying the second access technology and received in the subframe m; $P'_{rsvp\_RX}$ denotes the value of a logical slot corresponding to the module applying the first access technology, converted from a period corresponding to a value indicated by a resource reservation field in the SCI; in a case where the slot n is included in

$( t^{SL}_{LTE\_0}, t^{SL}_{LTE\_1}, \ldots, t^{SL}_{LTE\_Tmax} )$, *n'* corresponds to the same logical subframe as n, and otherwise, *n'* is the first logical subframe after the slot n in ( $t^{SL}_{LTE\_0}, t^{SL}_{LTE\_1}, \ldots, t^{SL}_{LTE\_Tmax}$ ) within the system frame period, where ( $t^{SL}_{LTE\_0}, t^{SL}_{LTE\_1}, \ldots, t^{SL}_{LTE\_Tmax}$ ) denotes logical subframes when the second access technology is applied within the system frame period.

In an embodiment, in a case where a sixth preset condition is met, the number *Q* of resources included in the fourth resource set is determined by *K, $T_{scal}$*, and a first preset value; otherwise, *Q* = 1; where *K* denotes all available periodically reserved values in a resource pool configured by the hypothetical system applying the second access technology or a pre-configured resource pool in the unmonitored subframe m.

In an embodiment, the sixth preset condition includes one of the following.

No monitoring is performed in the subframe m, 100 * *K < max(100 ms, $T_{scal}$)*, and n' - m ≤ *$P'_{rsvp\_RX}$*; where *K* denotes all the available periodically reserved values in the resource pool configured by the hypothetical system applying the second access technology or the pre-configured resource pool in the unmonitored subframe m; *$P'_{rsvp\_RX}$* denotes the value of a logical slot corresponding to the module applying the first access technology, converted from a period corresponding to a periodically reserved value in the system applying the second access technology; in a case where the slot n is included in ( $t'^{SL}_0, t'^{SL}_1, \ldots, t'^{SL}_{T'max-1}$ ), *n'* corresponds to the same slot as n, and otherwise, n' is the first slot after the slot n in ( $t'^{SL}_0, t'^{SL}_1, \ldots, t'^{SL}_{T'max-1}$ ) within the system frame period, where ( $t'^{SL}_0, t'^{SL}_1, \ldots, t'^{SL}_{T'max-1}$ ) denotes slots in the resource pool when the first access technology is applied within the system frame period.

No monitoring is performed in the subframe m, 100 * *K < max(100 ms, $T_{scal}$)*, and n' - m ≤ *$P'_{rsvp\_RX}$*; where *K* denotes all the available periodically reserved values in the resource pool configured by the hypothetical system applying the second access technology or the pre-configured resource pool in the unmonitored subframe m; *$P'_{rsvp\_RX}$* denotes the value of a logical slot corresponding to the module applying the first access technology, converted from a period corresponding to a periodically reserved value in the system applying the second access technology; in a case where the slot n is included in ( $t^{SL}_{LTE\_0}, t^{SL}_{LTE\_1}, \ldots, t^{SL}_{LTE\_Tmax}$ ), n' corresponds to the same logical subframe as n, and otherwise, n' is the first logical subframe after the slot n in ( $t^{SL}_{LTE\_0}, t^{SL}_{LTE\_1}, \ldots, t^{SL}_{LTE\_Tmax}$ ) within the system frame period, where ( $t^{SL}_{LTE\_0}, t^{SL}_{LTE\_1}, \ldots, t^{SL}_{LTE\_Tmax}$ ) denotes logical subframes when the second access technology is applied within the system frame period.

In an embodiment, in a case where the module applying the first access technology is configured with full sensing, *$T_{scal}$* is determined by the length of the resource selection window; and in a case where the module applying the first access technology is configured with partial sensing, $T_{scal} = t'^{SL}_{y_L} - (t'^{SL}_{y_i} - T^{SL}_{proc,1})$ ; where $t'^{SL}_{y_L}$ denotes the last slot among candidate slots consisting of *Y* and *Y'*, $t'^{SL}_{y_i}$ denotes the first slot in a selected set or remaining set among the candidate slots consisting of *Y* and *Y'*, and $T^{SL}_{proc,1}$ denotes a specific device processing time.

In an embodiment, the SCI sent by applying the second access technology is received in one of the following manners: the SCI sent by applying the second access technology is received through the module applying the first access technology or the SCI sent by applying the second access technology is received through the module applying the second access technology.

In an embodiment, the first communication device may receive the SCI sent by a second communication device, and the second communication device sends the SCI by applying the second access technology. The first communication device may directly receive the SCI through the module applying the first access technology; the first communication device may also receive the SCI through the module applying the second access technology and then forward the SCI to the module applying the first access technology. The second communication device may be an LTE UE or may be a dual-mode UE including both an NR module and an LTE module.

In the preceding embodiments, the case where the slot n is included in ( $t^{SL}_{LTE\_0}, t^{SL}_{LTE\_1}, \ldots, t^{SL}_{LTE\_Tmax}$ ) may mean that the time-domain location of the slot n overlaps with the time-domain location of a certain subframe in ( $t^{SL}_{LTE\_0}, t^{SL}_{LTE\_1}, \ldots, t^{SL}_{LTE\_Tmax}$ ); the case where the slot n is included in ( $t'^{SL}_0, t'^{SL}_1, \ldots, t'^{SL}_{T'max-1}$ ) may mean that the time-domain location of the slot n overlaps with the time-domain location of a certain slot in (

$$t'^{SL}_0, t'^{SL}_1, \ldots, t'^{SL}_{T'_{max}-1} \text{ ).}$$

In an embodiment, the collision condition between the second resource set and the fourth resource set and the resource exclusion procedure are described below by using an example where the first access technology is NR, the second access technology is LTE, and the logical subframe m in the second access technology is characterized by the subframe $t^{SL}_{LTE\_m}$ .

In a case where LTE SCI is received in the subframe $t^{SL}_{LTE\_m}$ , the SCI reserves resources in the subframe $t^{SL}_{m+q*P_{step}*P_{rsvp\_RX}}$ , and the following two conditions are met, the candidate transmission resource $R_{x,y}$ is excluded.

Condition one: Any resource in $R_{x,y+j\times P'_{rsvp\_TX}}$ (that is, the second resource set in the preceding embodiments) overlaps with any resource in the reserved $t^{SL}_{m+q*P_{step}*P_{rsvp\_RX}}$ (that is, the fourth resource set in the preceding embodiments), where q = 1, 2, ... , Q and j = 0, 1, 2, ..., $C_{resel}$ - 1.

Condition two: The RSRP of the LTE SCI received in the subframe $t^{SL}_{LTE\_m}$ exceeds the first threshold or the RSSI of the LTE SCI received in the subframe $t^{SL}_{LTE\_m}$ exceeds the second threshold. $t^{SL}_{LTE\_m}$ denotes one subframe among remaining subframes numbered ( $t^{SL}_{LTE\_0}, t^{SL}_{LTE\_1}, \ldots, t^{SL}_{LTE\_Tmax}$ ) after LTE SSB subframes, LTE downlink subframes, LTE special subframes, and reserved subframes are excluded from subframes 0 to 10239 and; $R_{x,y}$ denotes candidate transmission resources used by the first access technology within the resource selection window, where x denotes a frequency-domain starting index of the candidate transmission resource, and y denotes a time-domain index of the candidate transmission resource; Q denotes the total number of resources included in the fourth resource set; $C_{resel}$ denotes the total number of resources included in the second resource set; $P_{LTE\_rsvp\_RX}$ denotes the value of the resource periodic reservation field indicated by the SCI sent by applying LTE and received in the subframe $t^{SL}_{LTE\_m}$ .

Table 2 Values of $P_{LTE\_rsvp\_RX}$ in SCI format 1

| Resource reservation field in SCI format 1 | Indicated value X | Condition |
|---|---|---|
| '0001', '0010', ..., '1010' | Decimal equivalent of the field | Determine, by the higher layer, to reserve resources for transmitting the next transport block, and X meets $1 \le X \le 10$. |
| '1011' | 0.5 | Determine, by the higher layer, to reserve resources for transmitting the next transport block, and X is 0.5. |
| '1100' | 0.2 | Determine, by the higher layer, to reserve resources for transmitting the next transport block, and X is 0.2. |
| '0000' | 0 | Determine, by the higher layer, not to reserve resources for transmitting the next transport block. |
| '1101', '1110', '1111' | Reserved | |

X is equal to the resource reservation period provided by the higher layer divided by 100.

Table 3 $P_{step}$ Configurations

| | $P_{step}$ |
|---|---|
| TDD with UL/DL configuration 0 | 60 |
| TDD with UL/DL configuration 1 | 40 |
| TDD with UL/DL configuration 2 | 20 |
| TDD with UL/DL configuration 3 | 30 |

(continued)

| | $P_{step}$ |
|---|---|
| TDD with UL/DL configuration 4 | 20 |
| TDD with UL/DL configuration 5 | 10 |
| TDD with UL/DL configuration 6 | 50 |
| Otherwise | 100 |

In an embodiment, in a case where hypothetical LTE SCI is received (that is, the subframe $t_{LTE\_m}^{SL}$ is not monitored) and $y + j \times P'_{rsvp\_TX} = m + q * P_{step} * k$ is met, the candidate transmission resource $R_{x,y}$ is excluded, where $q = 1, 2, ... , Q, j = 0, 1, 2, ... , C_{resel}$ - 1 , and $k$ denotes any value configured by the LTE higher-layer parameter *restrictResourceReservationPeriod.*

In an embodiment, the collision condition between the second resource set and the fourth resource set and the resource exclusion procedure are described below by using an example where the first access technology is NR, the second access technology is LTE, the slot m in the second access technology is characterized by the subframe $t_{LTE\_m}^{SL}$, and the specific resource is a feedback resource.

In a case where LTE SCI is received in the subframe $t_{LTE\_m}^{SL}$, the SCI reserves resources in the subframe $t_{m+q*P_{step}*P_{rsvp\_RX}}^{SL}$, and the following three conditions are met, the candidate transmission resource $R_{x,y}$ is excluded.

Condition one: HARQ feedback is enabled by data transmission on the candidate transmission resource.

Condition two: A PSFCH feedback resource corresponding to any resource in $R_{x,y+j \times P'_{rsvp\_TX}}$ (that is, the second resource set in the preceding embodiments) overlaps with any resource in the reserved $t_{m+q*P_{step}*P_{rsvp\_RX}}^{SL}$ (that is, the fourth resource set in the preceding embodiments), where $q = 1, 2, ..., Q$ and $j = 0, 1, 2, ... , C_{resel}$ - 1.

Condition three: The RSRP of the LTE SCI received in the subframe $t_{LTE\_m}^{SL}$ exceeds the first threshold or the RSSI of the LTE SCI received in the subframe $t_{LTE\_m}^{SL}$ exceeds the second threshold. $t_{LTE\_m}^{SL}$ denotes one subframe among remaining slots numbered ($t_{LTE\_0}^{SL}, t_{LTE\_1}^{SL}, ..., t_{LTE\_Tmax}^{SL}$) after LTE SSB subframes, LTE downlink subframes, LTE special subframes, and reserved subframes are excluded from subframes 0 to 10239; $R_{x,y}$ denotes candidate transmission resources used by the first access technology within the resource selection window, where x denotes a frequency-domain starting index of the candidate transmission resource, and y denotes a time-domain index of the candidate transmission resource; Q denotes the total number of resources included in the fourth resource set; $C_{resel}$ denotes the total number of resources included in the second resource set; $P_{LTE\_rsvp\_RX}$ denotes the value of the resource periodic reservation field indicated by the SCI sent by applying LTE and received in the subframe $t_{LTE\_m}^{SL}$ (see Table 2).

In an embodiment, in a case where hypothetical LTE SCI is received (that is, the subframe $t_{LTE\_m}^{SL}$ is not monitored) and a PSFCH feedback resource corresponding to the candidate transmission resource in the slot $y + j \times P'_{rsvp\_TX}$ overlaps with $m + q * P_{step} * k,$ the candidate transmission resource $R_{x,y}$ is excluded, where $q = 1, 2, ... , Q , j = 0, 1, 2, ... , C_{resel}$ - 1, and $k$ denotes any value configured by the LTE higher-layer parameter *restrictResourceReservationPeriod.*

In an embodiment, in a case where a UE is configured with an NR module (that is, the module applying the first access technology) and excludes, through the NR module, resources reserved by the LTE UE, the number Q of resources included in the fourth resource set may be determined according to an LTE logic.

Example one: In a case where LTE SCI is received in the subframe $t_{LTE\_m}^{SL}$ and the NR module is configured with full sensing, $Q = \dfrac{1}{P_{LTE\_rsvp\_RX}}$; where $P_{LTE\_rsvp\_RX} < 1$ and $n' - m \leq P_{step} * P_{LTE\_rsvp\_RX}$; $P_{LTE\_rsvp\_RX}$ denotes the value of a resource periodic reservation field indicated in the SCI sent by applying the second access technology and received in the subframe m (see Table 2); $P_{step}$ denotes a system-configured, pre-configured or pre-defined parameter when the second access technology is applied (see Table 3); in a case where the slot n is included in (

$\acute{t}^{SL}_{LTE\_0}, t^{SL}_{LTE\_1}, \ldots, t^{SL}_{LTE\_Tmax}$ ), $n'$ corresponds to the same logical subframe as n, and otherwise, $n'$ is the first logical subframe after the slot $n$ in ( $t^{SL}_{LTE\_0}, t^{SL}_{LTE\_1}, \ldots, t^{SL}_{LTE\_Tmax}$ ) within the system frame period, where ( $t^{SL}_{LTE\_0}, t^{SL}_{LTE\_1}, \ldots, t^{SL}_{LTE\_Tmax}$ ) denotes logical subframes when LTE is applied within the system frame period. Otherwise, $Q = 1$.

Example two: In a case where LTE SCI is received in the subframe $t^{SL}_{LTE\_m}$ and the NR module is configured with full sensing, $Q = \dfrac{1}{P_{LTE\_rsvp\_RX}}$ ; where $P_{LTE\_rsvp\_RX} < 1$ and $n' - m \le P_{step} * P_{LTE\_rsvp\_RX}$ ; $P_{LTE\_rsvp\_RX}$ denotes the value of a resource periodic reservation field indicated in the SCI sent by applying the second access technology and received in the subframe m (see Table 2); $P_{step}$ denotes a system-configured, pre-configured or pre-defined parameter when the second access technology is applied (see Table 3); in a case where the slot n is included in ( $t'^{SL}_{0}, t'^{SL}_{1}, \ldots, t'^{SL}_{T'_{max}-1}$ ), $n'$ corresponds to the same slot as n, and otherwise, $n'$ is the first slot after the slot n in ( $t'^{SL}_{0}, t'^{SL}_{1}, \ldots, t'^{SL}_{T'_{max}-1}$ ) within the system frame period, where ( $t'^{SL}_{0}, t'^{SL}_{1}, \ldots, t'^{SL}_{T'_{max}-1}$ ) denotes slots in the resource pool when NR is applied within the system frame period.

Example three: In a case where LTE SCI is received in the subframe $t^{SL}_{LTE\_m}$ and the NR module is configured with partial sensing, $Q = \dfrac{1}{P_{LTE\_rsvp\_RX}}$ ; where $P_{LTE\_rsvp\_RX} < 1$ and $n' - m \le P_{step} * P_{LTE\_rsvp\_RX} + P_{step}$ ; $P_{LTE\_rsvp\_RX}$ denotes the value of a resource periodic reservation field indicated in the SCI sent by applying the second access technology and received in the subframe $m$ (see Table 2); $P_{step}$ denotes a system-configured, pre-configured or predefined parameter when LTE is applied (see Table 3); $n'$ is the last subframe among subframes consisting of $Y$ and $Y'$, where the subframes consisting of $Y$ and $Y'$ are part subframes within the resource selection window.

Example four: In a case where no monitoring is performed in the subframe m (that is, the subframe $t^{SL}_{LTE\_m}$ is not monitored) and the module applying NR is configured or pre-configured with full sensing, $Q = \dfrac{1}{k}$ ; where $k < 1$ and $n' - m \le P_{step} * k$ ; $P_{step}$ denotes a system-configured, pre-configured or pre-defined parameter when LTE is applied; in a case where the slot n is included in ( $t^{SL}_{LTE\_0}, t^{SL}_{LTE\_1}, \ldots, t^{SL}_{LTE\_Tmax}$ ), $n'$ corresponds to the same logical subframe as n, and otherwise, $n'$ is the first logical subframe after the slot $n$ in ( $t^{SL}_{LTE\_0}, t^{SL}_{LTE\_1}, \ldots, t^{SL}_{LTE\_Tmax}$ ) within the system frame period, where ( $\acute{t}^{SL}_{LTE\_0}, t^{SL}_{LTE\_1}, \ldots, t^{SL}_{LTE\_Tmax}$ ) denotes logical subframes when the second access technology is applied within the system frame period.

Example five: In a case where no monitoring is performed in the subframe m and the module applying the first access technology is configured or pre-configured with full sensing, $Q = \dfrac{1}{k}$ ; where $k < 1$ and $n' - m \le P_{step} * k$ ; $P_{step}$ denotes a system-configured, pre-configured or pre-defined parameter when LTE is applied; in a case where the slot n is included in ( $t'^{SL}_{0}, t'^{SL}_{1}, \ldots, t'^{SL}_{T'_{max}-1}$ ), $n'$ corresponds to the same slot as n, and otherwise, $n'$ is the first slot after the slot $n$ in ( $t'^{SL}_{0}, t'^{SL}_{1}, \ldots, t'^{SL}_{T'_{max}-1}$ ) within the system frame period, where ( $t'^{SL}_{0}, t'^{SL}_{1}, \ldots, t'^{SL}_{T'_{max}-1}$ ) denotes slots in the resource pool when the first access technology is applied within the system frame period.

Example six: In a case where no monitoring is performed in the subframe m and the module applying the first access technology is configured or pre-configured with partial sensing, $Q = \dfrac{1}{k}$ ; where $k < 1$ and $n' - m \le P_{step} * k + P_{step}$ ; $P_{step}$ denotes a system-configured, pre-configured or pre-defined parameter when LTE is applied; $n'$ is the last subframe among subframes consisting of $Y$ and $Y'$, where the subframes consisting of $Y$ and $Y'$ are part subframes within the resource selection window; $P_{step}$ denotes a system-configured, pre-configured or pre-defined parameter when the second access technology is applied; m denotes a logical subframe index within a system frame period for a subframe of received data used by the second access technology; in a case where the slot n is included in ( $\acute{t}^{SL}_{LTE\_0}, t^{SL}_{LTE\_1}, \ldots, t^{SL}_{LTE\_Tmax}$ ), $n'$ corresponds to the same logical subframe as n, and otherwise, $n'$ is the first logical subframe after the slot $n$ in ( $t^{SL}_{LTE\_0}, t^{SL}_{LTE\_1}, \ldots, t^{SL}_{LTE\_Tmax}$ ) within the system frame period, where ( $t^{SL}_{LTE\_0}, t^{SL}_{LTE\_1}, \ldots, t^{SL}_{LTE\_Tmax}$ ) denotes

logical subframes when the second access technology is applied within the system frame period.

Example seven: In a case where no monitoring is performed in the subframe m and the module applying the first access technology is configured or pre-configured with partial sensing, $Q = \frac{1}{k}$; where $k < 1$ and $n' - m \le P_{step} * k + P_{step}$; $P_{step}$ denotes a system-configured, pre-configured or pre-defined parameter when LTE is applied; $n'$ is the last subframe among subframes consisting of $Y$ and $Y'$, where the subframes consisting of $Y$ and $Y'$ are part subframes within the resource selection window; $P_{step}$ denotes a system-configured, pre-configured or pre-defined parameter when the second access technology is applied; m denotes a logical subframe index within a system frame period for a subframe of received data used by the second access technology; in a case where the slot n is included in ( $t'^{SL}_0, t'^{SL}_1, \ldots, t'^{SL}_{T'_{max}-1}$ ), $n'$ corresponds to the same slot as n, and otherwise, $n'$ is the first slot after the slot n in ( $t'^{SL}_0, t'^{SL}_1, \ldots, t'^{SL}_{T'_{max}-1}$ ) within the system frame period, where ( $t'^{SL}_0, t'^{SL}_1, \ldots, t'^{SL}_{T'_{max}-1}$ ) denotes slots in the resource pool when the first access technology is applied within the system frame period.

In an embodiment, in a case where a UE is configured with an NR module (that is, the module applying the first access technology) and excludes, through the NR module, resources reserved by the LTE UE, the number Q of resources included in the fourth resource set may be determined according to an NR logic.

Example one: In a case where LTE SCI is received in the subframe $t^{SL}_{LTE\_m}$, $Q = \frac{T_{scal}}{100 * P_{LTE\_rsvp\_RX}}$ ; where $100 * P_{LTE\_rsvp\_RX} < T_{scal}$ and $n' - m \le P'_{rsvp\_RX}$ ; $P'_{rsvp\_RX}$ denotes the value of a logical slot corresponding to the module applying the first access technology, converted from a period corresponding to a value indicated by a resource reservation field in the SCI sent by applying the second access technology and received in the subframe m; in a case where the slot n is included in ( $t^{SL}_{LTE\_0}, t^{SL}_{LTE\_1}, \ldots, t^{SL}_{LTE\_Tmax}$ ), $n'$ corresponds to the same logical subframe as n, and otherwise, $n'$ is the first logical subframe after the slot n in ( $t^{SL}_{LTE\_0}, t^{SL}_{LTE\_1}, \ldots, t^{SL}_{LTE\_Tmax}$ ) within the system frame period, where ( $t^{SL}_{LTE\_0}, t^{SL}_{LTE\_1}, \ldots, t^{SL}_{LTE\_Tmax}$ ) denotes logical subframes when the second access technology is applied within the system frame period.

Example two: In a case where LTE SCI is received in the subframe $t^{SL}_{LTE\_m}$ , $Q = \frac{T_{scal}}{100 * P_{LTE\_rsvp\_RX}}$ ; where $100 * P_{LTE\_rsvp\_RX} < T_{scal}$ and $n' - m \le P'_{rsvp\_RX}$ ; $P'_{rsvp\_RX}$ denotes the value of a logical slot corresponding to the module applying the first access technology, converted from a period corresponding to a value indicated by a resource reservation field in the SCI sent by applying the second access technology and received in the subframe m; in a case where the slot n is included in ( $t'^{SL}_0, t'^{SL}_1, \ldots, t'^{SL}_{T'_{max}-1}$ ), $n'$ corresponds to the same slot as n, and otherwise, $n'$ is the first slot after the slot n in ( $t'^{SL}_0, t'^{SL}_1, \ldots, t'^{SL}_{T'_{max}-1}$ ) within the system frame period, where ( $t'^{SL}_0, t'^{SL}_1, \ldots, t'^{SL}_{T'_{max}-1}$ ) denotes slots in the resource pool when the first access technology is applied within the system frame period.

Example three: In a case where no monitoring is performed in the subframe m (that is, the subframe $t^{SL}_{LTE\_m}$ is not monitored), $Q = \left\lceil \frac{T_{scal}}{100 * K} \right\rceil$ ; where $100 * K < T_{scal}$ and $n' - m \le P'_{rsvp\_RX}$ ; $K$ denotes all available periodically reserved values in a resource pool configured by the hypothetical system applying the second access technology or a pre-configured resource pool in the unmonitored subframe m; $P'_{rsvp\_RX}$ denotes the value of a logical slot corresponding to the module applying the first access technology, converted from a period corresponding to a periodically reserved value in the system applying the second access technology; in a case where the slot n is included in ( $t'^{SL}_0, t'^{SL}_1, \ldots, t'^{SL}_{T'_{max}-1}$ ), $n'$ corresponds to the same slot as n, and otherwise, n' is the first slot after the slot n in ( $t'^{SL}_0, t'^{SL}_1, \ldots, t'^{SL}_{T'_{max}-1}$ ) within a system frame period, where ( $t'^{SL}_0, t'^{SL}_1, \ldots, t'^{SL}_{T'_{max}-1}$ ) denotes slots in the resource pool when the first access technology is applied within the system frame period.

Example four: In a case where no monitoring is performed in the subframe m (that is, the subframe $t^{SL}_{LTE\_m}$ is

not monitored), $Q = \left\lceil \frac{T_{scal}}{100 * K} \right\rceil$ ; ; where 100 * $K$ < $T_{scal}$ and $n'$ - $m \leq P'_{rsvp\_RX}$ ; $K$ denotes all available periodically reserved values in a resource pool configured by the hypothetical system applying the second access technology or a pre-configured resource pool in the unmonitored subframe m; $P'_{rsvp\_RX}$ denotes the value of a logical slot corresponding to the module applying the first access technology, converted from a period corresponding to a periodically reserved value in the system applying the second access technology; in a case where the slot n is included in ( $t^{SL}_{LTE\_0}, t^{SL}_{LTE\_1}, \ldots, t^{SL}_{LTE\_Tmax}$ ), $n'$ corresponds to the same logical subframe as n, and otherwise, $n'$ is the first logical subframe after the slot n in ( $t^{SL}_{LTE\_0}, t^{SL}_{LTE\_1}, \ldots, t^{SL}_{LTE\_Tmax}$ ) within a system frame period, where ( $t^{SL}_{LTE\_0}, t^{SL}_{LTE\_1}, \ldots, t^{SL}_{LTE\_Tmax}$ ) denotes logical subframes when the second access technology is applied within the system frame period.

In an embodiment, in a case where Q is determined according to the NR logic and the NR module is configured with full sensing, $T_{scal}$ is determined by the length of the resource selection window.

In an embodiment, in a case where Q is determined according to the NR logic and the NR module is configured with partial sensing, $T_{scal} = t'^{SL}_{y_L} - (t'^{SL}_{y_i} - T^{SL}_{proc,1})$ ; where $t'^{SL}_{y_L}$ denotes the last slot among candidate slots consisting of Y and Y'; $t'^{SL}_{y_i}$ denotes the first slot in a selected set or remaining set among the candidate slots consisting of Y and Y'; $T^{SL}_{proc,1}$ denotes a specific device processing time.

In an embodiment, in Example one and Example two where Q is determined according to the NR logic, $P_{LTE\text{-}rsvp\text{-}RX}$ denotes the value of the resource periodic reservation field indicated in SCI sent by applying LTE and received in the subframe $t^{SL}_{LTE\_m}$ , and $P'_{rsvp\_RX}$ denotes the value of the logical slot corresponding to the module applying the first access technology, converted from the period corresponding to the periodically reserved value in the system applying the second access technology. The period conversion formula between $P_{LTE\_rsvp\_RX}$ and $P'_{rsvp\_RX}$ may be as follows:

$$P'_{rsvp\_RX} = \left\lceil \frac{T'_{max}}{10240 \ ms} \times 100 * P_{LTE\_rsvp\_RX} \right\rceil.$$

In an embodiment, in Example one and Example two where Q is determined according to the NR logic, $P_{LTE\_rsvp\_RX}$ denotes the value of the resource periodic reservation field indicated in SCI sent by applying LTE and received in the subframe $t^{SL}_{LTE\_m}$ , and $P'_{rsvp\_RX}$ denotes the value of the logical slot corresponding to the module applying the first access technology, converted from the period corresponding to the periodically reserved value in the system applying the second access technology. The period conversion formula between $P_{LTE\_rsvp\_RX}$ and $P'_{rsvp\_RX}$ may be as follows:

$$P'_{rsvp\_RX} = \left\lceil \frac{T'_{max}}{10240 \ ms} \times 100 * P_{LTE\_rsvp\_RX} \right\rceil.$$

In an embodiment, in a case where a UE is configured with an NR module (that is, the module applying the first access technology) and excludes, through the NR module, resources reserved by the LTE UE, the number Q of resources included in the fourth resource set may be determined according to the NR logic and a first preset value (for example, 100 ms).

Example one: In a case where the SCI sent by applying the second access technology is received in the subframe m, $Q = \frac{max\ (100ms, T_{scal})}{100 * P_{LTE\_rsvp\_RX}}$ ; where 100 * $P_{LTE\_rsvp\text{-}RX}$ < $max$(100 $ms$, $T_{scal}$) and $n' - m \leq P'_{rsvp\_RX}$ ; $P_{LTE\_rsvp\_RX}$ denotes the value corresponding to a resource periodic reservation field in the SCI sent by applying the second access technology and received in the subframe m; $P'_{rsvp\_RX}$ denotes the value of a logical slot corresponding to the module applying the first access technology, converted from a period corresponding to a value indicated by a resource reservation field in the SCI; in a case where the slot n is included in ( $t'^{SL}_0, t'^{SL}_1, \ldots, t'^{SL}_{T'_{max}-1}$ ), $n'$ corresponds to the same slot as n, and otherwise, $n'$ is the first slot after the slot n in ( $t'^{SL}_0, t'^{SL}_1, \ldots, t'^{SL}_{T'_{max}-1}$ ) within the system frame

period, where ( $t'^{SL}_0, t'^{SL}_1, \ldots, t'^{SL}_{T'_{max}-1}$ ) denotes slots in the resource pool when the first access technology is applied within the system frame period.

Example two: In a case where the SCI sent by applying the second access technology is received in the subframe m, $Q = \frac{max\,(100ms, T_{scal})}{100*P_{LTE\_rsvp\_RX}}$ ; where $100 * P_{LTE\_rsvp\_RX} < max(100\,ms, T_{scal})$ and $n' - m \leq P'_{rsvp\_RX}$ ; $P_{LTE\_rsvp\_RX}$ denotes the value corresponding to a resource periodic reservation field in the SCI sent by applying the second access technology and received in the subframe m; $P'_{rsvp\_RX}$ denotes the value of a logical slot corresponding to the module applying the first access technology, converted from a period corresponding to a value indicated by a resource reservation field in the SCI; in a case where the slot n is included in ( $t^{SL}_{LTE\_0}, t^{SL}_{LTE\_1}, \ldots, t^{SL}_{LTE\_Tmax}$ ), n' corresponds to the same logical subframe as n, and otherwise, $n'$ is the first logical subframe after the slot n in ( $t^{SL}_{LTE\_0}, t^{SL}_{LTE\_1}, \ldots, t^{SL}_{LTE\_Tmax}$ ) within the system frame period, where ( $t^{SL}_{LTE\_0}, t^{SL}_{LTE\_1}, \ldots, t^{SL}_{LTE\_Tmax}$ ) denotes logical subframes when the second access technology is applied within the system frame period.

Example three: In a case where no monitoring is performed in the subframe m (that is, the subframe $t^{SL}_{LTE\_m}$ is not monitored), $Q = \left\lceil \frac{max(100ms, T_{scal})}{100*K} \right\rceil$ ; where $100 * K < max(100\,ms, T_{scal})$ and $n' - m \leq P'_{rsvp\_RX}$ ; K denotes all available periodically reserved values in a resource pool configured by the hypothetical system applying the second access technology or a pre-configured resource pool in the unmonitored subframe m; $P'_{rsvp\_RX}$ denotes the value of a logical slot corresponding to the module applying the first access technology, converted from a period corresponding to a periodically reserved value in the system applying the second access technology; in a case where the slot n is included in $\left( t'^{SL}_0, t'^{SL}_1, \ldots, t'^{SL}_{T'_{max}-1} \right)$ , n' corresponds to the same slot as n, and otherwise, n' is the first slot after the slot $n$ in $\left( t'^{SL}_0, t'^{SL}_1, \ldots, t'^{SL}_{T'_{max}-1} \right)$ within the system frame period, where $\left( t'^{SL}_0, t'^{SL}_1, \ldots, t'^{SL}_{T'_{max}-1} \right)$ denotes slots in the resource pool when the first access technology is applied within the system frame period.

Example four: In a case where no monitoring is performed in the subframe m (that is, the subframe $t^{SL}_{LTE\_m}$ is not monitored), $Q = \left\lceil \frac{max(100ms, T_{scal})}{100*K} \right\rceil$ ; where $100 * K < max(100\,ms, T_{scal})$ and $n' - m \leq P'_{rsvp\_RX}$ ; K denotes all available periodically reserved values in a resource pool configured by the hypothetical system applying the second access technology or a pre-configured resource pool in the unmonitored subframe m; $P'_{rsvp\_RX}$ denotes the value of a logical slot corresponding to the module applying the first access technology, converted from a period corresponding to a periodically reserved value in the system applying the second access technology; in the case where the slot n is not included in $\left( t^{SL}_{LTE\_0}, t^{SL}_{LTE\_1}, \ldots, t^{SL}_{LTE\_Tmax} \right)$, n' corresponds to the same logical subframe as n, and otherwise, $n'$ is the first logical subframe after the slot n in $\left( t^{SL}_{LTE\_0}, t^{SL}_{LTE\_1}, \ldots, t^{SL}_{LTE\_Tmax} \right)$ within the system frame period, where $\left( t^{SL}_{LTE\_0}, t^{SL}_{LTE\_1}, \ldots, t^{SL}_{LTE\_Tmax} \right)$ denotes logical subframes when the second access technology is applied within the system frame period.

In an embodiment, in a case where Q is determined according to the NR logic and the first preset value and the NR module is configured with full sensing, $T_{scal}$ is determined by the length of the resource selection window.

In an embodiment, in a case where Q is determined according to the NR logic and the first preset value and the NR module is configured with partial sensing, $T_{scal} = t'^{SL}_{y_L} - (t'^{SL}_{y_i} - T^{SL}_{proc,1})$ ; where $t'^{SL}_{y_L}$ denotes the last slot among candidate slots consisting of Y and Y'; $t'^{SL}_{y_i}$ denotes the first slot in a selected set or remaining set among the candidate slots consisting of Y and Y'; $T^{SL}_{proc,1}$ denotes a specific device processing time.

In an embodiment, in Example one and Example two where Q is determined according to the NR logic and the first preset value, $P_{LTE\_rsvp\_RX}$ denotes the value of a resource periodic reservation field indicated in SCI sent by applying LTE and received in the subframe $t^{SL}_{LTE\_m}$, and $P'_{rsvp\_RX}$ denotes the value of the logical slot corresponding to the module applying the first access technology, converted from the period corresponding to the periodically reserved value in the system applying the second access technology. The period conversion formula between $P_{LTE\_rsvp\_RX}$ and $P'_{rsvp\_RX}$ may be as follows:

$$P'_{rsvp\_RX} = \left\lceil \frac{T'_{max}}{10240 \ ms} \times 100 * P_{LTE\_rsvp\_RX} \right\rceil.$$

In an embodiment, in Example three and Example four where Q is determined according to the NR logic and the first preset value, $P_{rsvp\_RX}$ = 100 $* K$, in units of ms, where $K$ denotes any value configured by the LTE higher-layer parameter; and $P'_{rsvp\_RX}$ denotes the value of an NR logical slot, converted from $P_{rsvp\_RX}$. The period conversion formula between $P_{rsvp\_RX}$ and $P'_{rsvp\_RX}$ may be as follows:

$$P'_{rsvp\_RX} = \left\lceil \frac{T'_{max}}{10240 \ ms} \times P_{rsvp\_RX} \right\rceil.$$

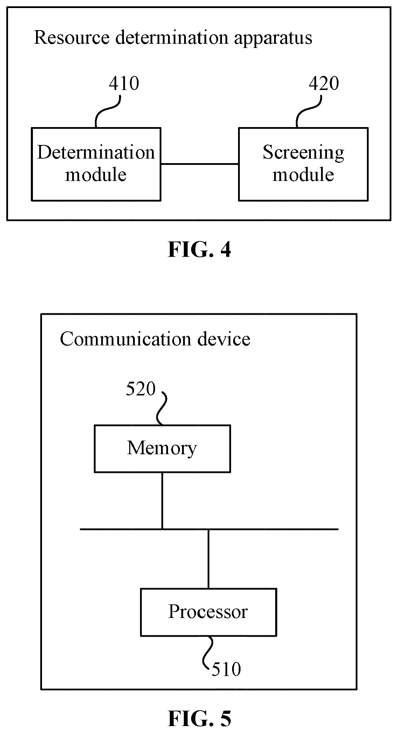

In an embodiment, FIG. 4 is a block diagram of a resource determination apparatus according to an embodiment of the present application. This embodiment is applied to a first communication device. As shown in FIG. 4, the resource determination apparatus of this embodiment includes a determination module 410 and a screening module 420.

The determination module 410 is configured to determine a resource conflict condition between a second resource set corresponding to each candidate transmission resource in a first resource set and a fourth resource set corresponding to each sensing resource in a third resource set, where the first resource set includes at least one candidate transmission resource used by a first access technology within a resource selection window, and the third resource set includes at least one sensing resource used by a second access technology within a resource sensing window.

The screening module 420 is configured to exclude a candidate transmission resource from the first resource set according to the resource conflict condition.

In an embodiment, the sensing resource includes: a received transmission resource used by the second access technology or a hypothetical transmission resource used by the second access technology.

The second resource set includes a candidate transmission resource and a first number of periodically reserved resources corresponding to the candidate transmission resource.

The fourth resource set includes a second number of periodically reserved resources corresponding to a sensing resource.

In an embodiment, the determined resource conflict condition between the second resource set corresponding to each candidate transmission resource in the first resource set and the fourth resource set corresponding to each sensing resource in the third resource set includes one of the following: a resource conflict condition between any resource in the second resource set and any resource in the fourth resource set; or a resource conflict condition between a specific resource associated with any resource in the second resource set and any resource in the fourth resource set.

In an embodiment, the resource conflict condition includes at least one of the following: a time-frequency resource location corresponding to any resource in the second resource set overlaps with a time-frequency resource location corresponding to any resource in the fourth resource set; a time-domain resource location corresponding to any resource in the second resource set overlaps with a time-domain resource location corresponding to any resource in the fourth resource set; a time-frequency resource location of the specific resource associated with any resource in the second resource set overlaps with a time-frequency resource location corresponding to any resource in the fourth resource set; a time-domain resource location of the specific resource associated with any resource in the second resource set overlaps with a time-domain resource location corresponding to any resource in the fourth resource set; an RSRP of a sensing resource corresponding to the fourth resource set is greater than a first threshold; or an RSSI of a sensing resource corresponding to the fourth resource set is greater than a second threshold.

In an embodiment, the resource in the second resource set is determined based on a slot in a resource pool used by the first access technology.

The resource in the fourth resource set is determined based on a logical subframe used by the second access technology.

In an embodiment, in a case where a first preset condition is met, the number Q of resources included in the fourth resource set is determined by $P_{LTE\_rsvp\_RX}$; otherwise, Q = 1; where $P_{LTE\_rsvp\_RX}$ denotes the value of a resource periodic reservation field indicated in the SCI sent by applying the second access technology and received in a subframe m, where m denotes a logical subframe index within a system frame period for a subframe of received data used by the second access technology.

In an embodiment, the first preset condition includes one of the following.

The SCI sent by applying the second access technology is received in the subframe m, a module applying the first access technology is configured or pre-configured with full sensing, $P_{LTE\_rsvp\_RX} < 1$, and $n' - m \leq P_{step} * P_{LTE\_rsvp\_RX}$; where in a case where a slot n is included in $\left(t_{LTE\_0}^{SL}, t_{LTE\_1}^{SL}, \ldots, t_{LTE\_T_{max}}^{SL}\right)$, n' corresponds to the same logical subframe as n, and otherwise, n' is the first logical subframe after the slot n in $\left(t_{LTE\_0}^{SL}, t_{LTE\_1}^{SL}, \ldots, t_{LTE\_T_{max}}^{SL}\right)$ within the system frame period, where $\left(t_{LTE\_0}^{SL}, t_{LTE\_1}^{SL}, \ldots, t_{LTE\_T_{max}}^{SL}\right)$ denotes logical subframes when the second access technology is applied within the system frame period.

The SCI sent by applying the second access technology is received in the subframe m, the module applying the first access technology is configured or pre-configured with full sensing, $P_{LTE\_rsvp\_RX} < 1$, and $n'-m \leq P_{step}*P_{LTE\_rsvp\_RX}$; where in a case where the slot n is included in $\left(t_0'^{SL}, t_1'^{SL}, \ldots, t_{T'_{max}-1}'^{SL}\right)$, n' corresponds to the same slot as n, and otherwise, n' is the first slot after the slot n in $\left(t'^{SL}_0, t'^{SL}_1, \ldots, t'^{SL}_{T'_{max}-1}\right)$ within the system frame period, where $\left(t'^{SL}_0, t'^{SL}_1, \ldots, t'^{SL}_{T'_{max}-1}\right)$ denotes slots in the resource pool when the first access technology is applied within the system frame period.

The SCI sent by applying the second access technology is received in the subframe m, the module applying the first access technology is configured or pre-configured with partial sensing, $P_{LTE\_rsvp\_RX} < 1$, and $n' - m \leq P_{step} * P_{LTE\_rsvp\_RX} + P_{step}$; where $P_{step}$ denotes a system-configured, pre-configured or pre-defined parameter when the second access technology is applied, and $n'$ is the last subframe among subframes consisting of $Y$ and $Y'$, where the subframes consisting of $Y$ and $Y'$ are part subframes within the resource selection window.

In an embodiment, in a case where a second preset condition is met, the number Q of resources included in the fourth resource set is determined by $k$; otherwise, Q = 1; where $k$ denotes all available periodically reserved values in a resource pool configured by a system applying the second access technology or all available periodically reserved values in a pre-configured resource pool.

In an embodiment, the second preset condition includes one of the following.

No monitoring is performed in the subframe m, the module applying the first access technology is configured or pre-configured with full sensing, $k < 1$, and $n'-m \leq P_{step}*k$; where in a case where the slot n is included in $\left(t_{LTE\_0}^{SL}, t_{LTE\_1}^{SL}, \ldots, t_{LTE\_T_{max}}^{SL}\right)$, n' corresponds to the same logical subframe as n, and otherwise, n' is the first logical subframe after the slot n in $\left(t_{LTE\_0}^{SL}, t_{LTE\_1}^{SL}, \ldots, t_{LTE\_T_{max}}^{SL}\right)$ within the system frame period, where $\left(t_{LTE\_0}^{SL}, t_{LTE\_1}^{SL}, \ldots, t_{LTE\_T_{max}}^{SL}\right)$ denotes logical subframes when the second access technology is applied within the system frame period.

No monitoring is performed in the subframe m, the module applying the first access technology is configured or pre-configured with full sensing, $k < 1$, and $n'-m \leq P_{step}*k$; where in a case where the slot n is included in $\left(t'^{SL}_0, t'^{SL}_1, \ldots, t'^{SL}_{T'_{max}-1}\right)$, n' corresponds to the same slot as n, and otherwise, n' is the first slot after the slot n in $\left(t'^{SL}_0, t'^{SL}_1, \ldots, t'^{SL}_{T'_{max}-1}\right)$ within the system frame period, where $\left(t'^{SL}_0, t'^{SL}_1, \ldots, t'^{SL}_{T'_{max}-1}\right)$ denotes slots in the resource pool when the first access technology is applied within the system frame period.

No monitoring is performed in the subframe m, the module applying the first access technology is configured or pre-configured with partial sensing, $k < 1$, and $n' - m \leq P_{step} * k + P_{step}$; where n' is the last subframe among subframes consisting of $Y$ and $Y'$, where the subframes consisting of $Y$ and $Y'$ are part subframes within the resource selection window; $P_{step}$ denotes a system-configured, pre-configured or pre-defined parameter when the second access technology is applied; m denotes a logical subframe index within the system frame period for a subframe of received data used by the second access technology; in a case where the slot $n$ is included in $\left(t_{LTE\_0}^{SL}, t_{LTE\_1}^{SL}, \ldots, t_{LTE\_T_{max}}^{SL}\right)$, n' corresponds to the same logical subframe as n, and otherwise, n' is the first logical subframe after the slot n in

$\left(t^{SL}_{LTE\_0}, t^{SL}_{LTE\_1}, \ldots, t^{SL}_{LTE\_Tmax}\right)$ within the system frame period, where $\left(t^{SL}_{LTE\_0}, t^{SL}_{LTE\_1}, \ldots, t^{SL}_{LTE\_Tmax}\right)$ denotes logical subframes when the second access technology is applied within the system frame period.

No monitoring is performed in the subframe m, the module applying the first access technology is configured or pre-configured with partial sensing, $k < 1$, and $n' - m \leq P_{step} * k + P_{step}$; where n' is the last subframe among subframes consisting of $Y$ and $Y'$, where the subframes consisting of $Y$ and $Y'$ are part subframes within the resource selection window; $P_{step}$ denotes a system-configured, pre-configured or pre-defined parameter when the second access technology is applied; m denotes a logical subframe index within the system frame period for a subframe of received data used by the second access technology; in a case where the slot n is included in $\left(t'^{SL}_0, t'^{SL}_1, \ldots, t'^{SL}_{T'_{max}-1}\right)$, n' corresponds to the same slot as n, and otherwise, n' is the first slot after the slot n in $\left(t'^{SL}_0, t'^{SL}_1, \ldots, t'^{SL}_{T'_{max}-1}\right)$ within the system frame period, where $\left(t'^{SL}_0, t'^{SL}_1, \ldots, t'^{SL}_{T'_{max}-1}\right)$ denotes slots in the resource pool when the first access technology is applied within the system frame period.

In an embodiment, in a case where a third preset condition is met, the number Q of resources included in the fourth resource set is determined by $P_{LTE\_rsvp\_RX}$ and $T_{scal}$; otherwise, Q = 1; where $P_{LTE\_rsvp\_RX}$ denotes the value of a resource periodic reservation field indicated in the SCI sent by applying the second access technology and received in the subframe m, where m denotes a logical subframe index within the system frame period for a subframe of received data used by the second access technology; and $T_{scal}$ denotes the millisecond value corresponding to a resource selection window size.

In an embodiment, the third preset condition includes one of the following.

The SCI sent by applying the first access technology is received in the subframe m, $100 * P_{LTE\_rsvp\_RX} < T_{scal}$, and $n' - m \leq P'_{rsvp\_RX}$; where $P'_{rsvp\_RX}$ denotes the value of a logical slot corresponding to the module applying the first access technology, converted from a period corresponding to a value indicated by a resource reservation field in the SCI sent by applying the second access technology and received in the subframe m; in a case where the slot n is included in $\left(t^{SL}_{LTE\_0}, t^{SL}_{LTE\_1}, \ldots, t^{SL}_{LTE\_Tmax}\right)$, n' corresponds to the same logical subframe as n, and otherwise, n' is the first logical subframe after the slot n in $\left(t^{SL}_{LTE\_0}, t^{SL}_{LTE\_1}, \ldots, t^{SL}_{LTE\_Tmax}\right)$ within the system frame period, where $\left(t^{SL}_{LTE\_0}, t^{SL}_{LTE\_1}, \ldots, t^{SL}_{LTE\_Tmax}\right)$ denotes logical subframes when the second access technology is applied within the system frame period.

The SCI sent by applying the first access technology is received in the subframe m, $100 * P_{LTE\_rsvp\_RX} < T_{scal}$, and $n' - m \leq P'_{rsvp\_RX}$; where $P'_{rsvp\_RX}$ denotes the value of a logical slot corresponding to the module applying the first access technology, converted from a period corresponding to a value indicated by a resource reservation field in the SCI sent by applying the second access technology and received in the subframe m; in a case where the slot n is included in $\left(t'^{SL}_0, t'^{SL}_1, \ldots, t'^{SL}_{T'_{max}-1}\right)$, n' corresponds to the same slot as n, and otherwise, n' is the first slot after the slot n in $\left(t'^{SL}_0, t'^{SL}_1, \ldots, t'^{SL}_{T'_{max}-1}\right)$ within the system frame period, where $\left(t'^{SL}_0, t'^{SL}_1, \ldots, t'^{SL}_{T'_{max}-1}\right)$ denotes slots in the resource pool when the first access technology is applied within the system frame period.

In an embodiment, in a case where a fourth preset condition is met, the number Q of resources included in the fourth resource set is determined by $K$ and $T_{scal}$; otherwise, Q = 1; where $K$ denotes all available periodically reserved values in a resource pool configured by the hypothetical system applying the second access technology or a pre-configured resource pool in an unmonitored subframe m.

In an embodiment, the fourth preset condition includes one of the following.

No monitoring is performed in the subframe m, $100 * K < T_{scal}$, and $n' - m \leq P'_{rsvp\_RX}$; where $K$ denotes all the available periodically reserved values in the resource pool configured by the hypothetical system applying the second access technology or the pre-configured resource pool in the unmonitored subframe m; $P'_{rsvp\_RX}$ denotes the value of a logical slot corresponding to the module applying the first access technology, converted from a period corresponding to a periodically reserved value in the system applying the second access technology; in a case where the slot n is included in $\left(t'^{SL}_0, t'^{SL}_1, \ldots, t'^{SL}_{T'_{max}-1}\right)$, n' corresponds to the same slot as n, and otherwise, n' is the first slot after the slot n in

$\left(t'^{SL}_0, t'^{SL}_1, \ldots, t'^{SL}_{T'_{max}-1}\right)$ within the system frame period, where $\left(t'^{SL}_0, t'^{SL}_1, \ldots, t'^{SL}_{T'_{max}-1}\right)$ denotes slots in the resource pool when the first access technology is applied within the system frame period.

No monitoring is performed in the subframe m, $100 * K < T_{scal}$, and $n' - m \leq P'_{rsvp\_RX}$; where $K$ denotes all the available periodically reserved values in the resource pool configured by the hypothetical system applying the second access technology or the pre-configured resource pool in the unmonitored subframe m; $P'_{rsvp\_RX}$ denotes the value of a logical slot corresponding to the module applying the first access technology, converted from a period corresponding to a periodically reserved value in the system applying the second access technology; in the case where the slot n is not included in $\left(t^{SL}_{LTE\_0}, t^{SL}_{LTE\_1}, \ldots, t^{SL}_{LTE\_Tmax}\right)$, n' corresponds to the same logical subframe as n, and otherwise, n' is the first logical subframe after the slot n in $\left(t^{SL}_{LTE\_0}, t^{SL}_{LTE\_1}, \ldots, t^{SL}_{LTE\_Tmax}\right)$ within the system frame period, where $\left(t^{SL}_{LTE\_0}, t^{SL}_{LTE\_1}, \ldots, t^{SL}_{LTE\_Tmax}\right)$ denotes logical subframes when the second access technology is applied within the system frame period.

In an embodiment, in a case where a fifth preset condition is met, the number Q of resources included in the fourth resource set is determined by $P_{LTE\_rsvp\_RX}$, $T_{scal}$, and a first preset value; otherwise, Q = 1; where $P_{LTE\_rsvp\_RX}$ denotes the value of a resource periodic reservation field indicated in the SCI sent by applying the second access technology and received in the subframe m, where m denotes a logical subframe index within the system frame period for a subframe of received data used by the second access technology; and $T_{scal}$ denotes a millisecond value corresponding to a resource selection window size.

In an embodiment, the fifth preset condition includes one of the following.

The SCI sent by applying the second access technology is received in the subframe m, $100 * P_{LTE\_rsvp\_RX} < max(100\,ms, T_{scal})$, and $n' - m \leq P'_{rsvp\_RX}$; where $P_{LTE\_rsvp\_RX}$ denotes the value corresponding to a resource periodic reservation field in the SCI sent by applying the second access technology and received in the subframe m; $P'_{rsvp\_RX}$ denotes the value of a logical slot corresponding to the module applying the first access technology, converted from a period corresponding to a value indicated by a resource reservation field in the SCI; in a case where the slot n is included in $\left(t'^{SL}_0, t'^{SL}_1, \ldots, t'^{SL}_{T'_{max}-1}\right)$, n' corresponds to the same slot as n, and otherwise, n' is the first slot after the slot n in $\left(t'^{SL}_0, t'^{SL}_1, \ldots, t'^{SL}_{T'_{max}-1}\right)$ within the system frame period, where $\left(t'^{SL}_0, t'^{SL}_1, \ldots, t'^{SL}_{T'_{max}-1}\right)$ denotes slots in the resource pool when the first access technology is applied within the system frame period.

The SCI sent by applying the second access technology is received in the subframe m, $100 * P_{LTE\_rsvp\_RX} < max(100\,ms, T_{scal})$, and $n' - m \leq P'_{rsvp\_RX}$; where $P_{LTE\_rsvp\_RX}$ denotes the value corresponding to a resource periodic reservation field in the SCI sent by applying the second access technology and received in the subframe m; $P'_{rsvp\_RX}$ denotes the value of a logical slot corresponding to the module applying the first access technology, converted from a period corresponding to a value indicated by a resource reservation field in the SCI; in a case where the slot n is included in $\left(t^{SL}_{LTE\_0}, t^{SL}_{LTE\_1}, \ldots, t^{SL}_{LTE\_Tmax}\right)$, n' corresponds to the same logical subframe as n, and otherwise, n is the first logical subframe after the slot n in $\left(t^{SL}_{LTE\_0}, t^{SL}_{LTE\_1}, \ldots, t^{SL}_{LTE\_Tmax}\right)$ within the system frame period, where $\left(t^{SL}_{LTE\_0}, t^{SL}_{LTE\_1}, \ldots, t^{SL}_{LTE\_Tmax}\right)$ denotes logical subframes when the second access technology is applied within the system frame period.

In an embodiment, in a case where a sixth preset condition being met, the number Q of resources included in the fourth resource set is determined by $K$, $T_{scal}$, and a first preset value; otherwise, Q = 1; where $K$ denotes all available periodically reserved values in a resource pool configured by the hypothetical system applying the second access technology or a pre-configured resource pool in the unmonitored subframe m.

In an embodiment, the sixth preset condition includes one of the following.

No monitoring is performed in the subframe m, $100 * K < max(100\,ms, T_{scal})$, and $n' - m \leq P'_{rsvp\_RX}$; where $K$ denotes all the available periodically reserved values in the resource pool configured by the hypothetical system applying the second access technology or the pre-configured resource pool in the unmonitored subframe m; $P'_{rsvp\_RX}$

denotes the value of a logical slot corresponding to the module applying the first access technology, converted from a period corresponding to a periodically reserved value in the system applying the second access technology; in a case where the slot n is included in $\left(t'^{SL}_0, t'^{SL}_1, \ldots, t'^{SL}_{T'_{max}-1}\right)$, n' corresponds to the same slot as n, and otherwise, n' is the first slot after the slot n in $\left(t'^{SL}_0, t'^{SL}_1, \ldots, t'^{SL}_{T'_{max}-1}\right)$ within the system frame period, where $\left(t'^{SL}_0, t'^{SL}_1, \ldots, t'^{SL}_{T'_{max}-1}\right)$ denotes slots in the resource pool when the first access technology is applied within the system frame period.

No monitoring is performed in the subframe m, $100*K < max(100\,ms, T_{scal})$, and $n' - m \leq P'_{rsvp\_RX}$; where $K$ denotes all the available periodically reserved values in the resource pool configured by the hypothetical system applying the second access technology or the pre-configured resource pool in the unmonitored subframe m; $P'_{rsvp\_RX}$ denotes the value of a logical slot corresponding to the module applying the first access technology, converted from a period corresponding to a periodically reserved value in the system applying the second access technology; in a case where the slot n is included in $\left(t^{SL}_{LTE\_0}, t^{SL}_{LTE\_1}, \ldots, t^{SL}_{LTE\_T_{max}}\right)$, n' corresponds to the same logical subframe as n, and otherwise, n' is the first logical subframe after the slot n in $\left(t^{SL}_{LTE\_0}, t^{SL}_{LTE\_1}, \ldots, t^{SL}_{LTE\_T_{max}}\right)$ within the system frame period, where $\left(t^{SL}_{LTE\_0}, t^{SL}_{LTE\_1}, \ldots, t^{SL}_{LTE\_T_{max}}\right)$ denotes logical subframes when the second access technology is applied within the system frame period.

In an embodiment, in a case where the module applying the first access technology is configured with full sensing, $T_{scal}$ is determined by the length of the resource selection window; and in a case where the module applying the first access technology is configured with partial sensing, $T_{scal} = t'^{SL}_{y_L} - (t'^{SL}_{y_i} - T^{SL}_{proc,1})$; where $t'^{SL}_{y_L}$ denotes the last slot among candidate slots consisting of $Y$ and Y', $t'^{SL}_{y_i}$ denotes the first slot in a selected set or remaining set among the candidate slots consisting of $Y$ and Y', and $T^{SL}_{proc,1}$ denotes a specific device processing time.

In an embodiment, the SCI sent by applying the second access technology is received in one of the following manners: the SCI sent by applying the second access technology is received through the module applying the first access technology or the SCI sent by applying the second access technology is received through the module applying the second access technology.

The resource determination apparatus provided in this embodiment is configured to perform the resource determination method applied by the first communication device described in the embodiment shown in FIG. 3. The implementation principles and technical effects of the resource determination apparatus provided in this embodiment are similar to those of the resource determination method applied by the first communication device described in the embodiment shown in FIG. 3 and thus are not repeated here.

In an embodiment, FIG. 5 is a structure diagram of a communication device according to an embodiment of the present application. As shown in FIG. 5, the communication device provided in the present application includes a processor 510, a memory 520, and a communication module 530. One or more processors 510 may be configured in the device. One processor 510 is shown as an example in FIG. 5. One or more memories 520 may be provided in the device. One memory 520 is shown as an example in FIG. 5. The processor 510, the memory 520, and the communication module 530 of the device may be connected via a bus or in other manners. The connection via a bus is shown as an example in FIG. 5. In this embodiment, the device may be a first communication device. The first communication device may include a module applying a first access technology and a module applying a second access technology, or the first communication device may include only a module applying a first access technology.

As a computer-readable storage medium, the memory 520 may be configured to store software programs, computer-executable programs, and modules, such as program instructions/modules corresponding to the device of any embodiment of the present application (for example, the determination module 410 and the screening module 420 in the resource determination apparatus). The memory 520 may include a program storage region and a data storage region. The program storage region may store an operating system and an application program required by at least one function. The data storage region may store data created according to the use of the device. Additionally, the memory 520 may include a high-speed random-access memory and may also include a nonvolatile memory such as at least one disk memory, a flash memory, or another nonvolatile solid-state memory. In some examples, the memory 520 may further include memories remotely disposed relative to the processor 510, and these remote memories may be connected to the device via a network. Examples of the preceding network include, but are not limited to, the Internet, an intranet, a local area network, a mobile communication network, and a combination thereof.

In a case where the communication device is a first communication device, the device may be configured to perform the resource determination method applied by the first communication device according to any preceding embodiment and has corresponding functions and effects.

The embodiments of the present application further provide a storage medium including computer-executable instructions which, when executed by a computer processor, cause the computer processor to perform a resource determination method applied by a first communication device. The method includes: determining a resource conflict condition between a second resource set corresponding to each candidate transmission resource in a first resource set and a fourth resource set corresponding to each sensing resource in a third resource set; where the first resource set includes at least one candidate transmission resource used by a first access technology within a resource selection window, and the third resource set includes at least one sensing resource used by a second access technology within a resource sensing window; and excluding a candidate transmission resource from the first resource set according to the resource conflict condition.

It is to be understood by those skilled in the art that the term "user equipment" encompasses any suitable type of wireless user equipment, for example, a mobile phone, a portable data processing apparatus, a portable web browser or a vehicle-mounted mobile station.

Generally speaking, embodiments of the present application may be implemented in hardware or special-purpose circuits, software, logic or any combination thereof. For example, some aspects may be implemented in hardware while other aspects may be implemented in firmware or software executable by a controller, a microprocessor or another computing apparatus, though the present application is not limited thereto.

Embodiments of the present application may be implemented through the execution of computer program instructions by a data processor of a mobile apparatus, for example, implemented in a processor entity, by hardware or by a combination of software and hardware. The computer program instructions may be assembly instructions, instruction set architecture (ISA) instructions, machine instructions, machine-related instructions, microcodes, firmware instructions, status setting data or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM) or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

**Claims**

1. A resource determination method, the method being applied to a first communication device and comprising:

    determining a resource conflict condition between a second resource set corresponding to each candidate transmission resource in a first resource set and a fourth resource set corresponding to each sensing resource in a third resource set; wherein the first resource set comprises at least one candidate transmission resource used by a first access technology within a resource selection window, and the third resource set comprises at least one sensing resource used by a second access technology within a resource sensing window; and
    excluding a candidate transmission resource from the first resource set according to the resource conflict condition.

2. The method of claim 1, wherein the sensing resource comprises: a received transmission resource used by the second access technology or a hypothetical transmission resource used by the second access technology;

    the second resource set comprises: the candidate transmission resource, and a first number of periodically reserved resources corresponding to the candidate transmission resource; and
    the fourth resource set comprises: a second number of periodically reserved resources corresponding to the sensing resource.

3. The method of claim 1, wherein the determined resource conflict condition between the second resource set corresponding to each candidate transmission resource in the first resource set and the fourth resource set corresponding to each sensing resource in the third resource set comprises one of the following:

a resource conflict condition between any resource in the second resource set and any resource in the fourth resource set; or
a resource conflict condition between a specific resource associated with any resource in the second resource set and any resource in the fourth resource set.

4. The method of claim 3, wherein the resource conflict condition comprises at least one of the following:

a time-frequency resource location corresponding to any resource in the second resource set overlaps with a time-frequency resource location corresponding to any resource in the fourth resource set;
a time-domain resource location corresponding to any resource in the second resource set overlaps with a time-domain resource location corresponding to any resource in the fourth resource set;
a time-frequency resource location of the specific resource associated with any resource in the second resource set overlaps with a time-frequency resource location corresponding to any resource in the fourth resource set;
a time-domain resource location of the specific resource associated with any resource in the second resource set overlaps with a time-domain resource location corresponding to any resource in the fourth resource set;
a reference signal received power (RSRP) of a sensing resource corresponding to the fourth resource set is greater than a first threshold; or
a received signal strength indicator (RSSI) of a sensing resource corresponding to the fourth resource set is greater than a second threshold.

5. The method of claim 1, wherein a resource in the second resource set is determined based on a slot in a resource pool used by the first access technology; and
a resource in the fourth resource set is determined based on a logical subframe used by the second access technology.

6. The method of any one of claims 1 to 5, wherein in response to a first preset condition being met, a number Q of resources comprised in the fourth resource set is determined by $P_{LTE\_rsvp\_RX}$; and in response to the first preset condition not being met, Q = 1; wherein $P_{LTE\_rsvp\_RX}$ denotes a value of a resource periodic reservation field indicated in sidelink control information (SCI) sent by applying the second access technology and received in a subframe m, wherein m denotes a logical subframe index within a system frame period for a subframe of received data used by the second access technology.

7. The method of claim 6, wherein the first preset condition comprises:

the SCI sent by applying the second access technology is received in the subframe m, a module applying the first access technology is configured or pre-configured with full sensing, $P_{LTE\_rsvp\_RX}$ < 1, and n'-m ≤ $P_{step}$*$P_{LTE\_rsvp\_RX}$; wherein in response to a slot n being comprised in $\left( t_{LTE\_0}^{SL}, t_{LTE\_1}^{SL}, \ldots, t_{LTE\_T_{max}}^{SL} \right)$, n' corresponds to a same logical subframe as n, and in response to the slot n not being comprised in $\left( t_{LTE\_0}^{SL}, t_{LTE\_1}^{SL}, \ldots, t_{LTE\_T_{max}}^{SL} \right)$, n' is a first logical subframe after the slot n in $\left( t_{LTE\_0}^{SL}, t_{LTE\_1}^{SL}, \ldots, t_{LTE\_T_{max}}^{SL} \right)$ within the system frame period, wherein $\left( t_{LTE\_0}^{SL}, t_{LTE\_1}^{SL}, \ldots, t_{LTE\_T_{max}}^{SL} \right)$ denotes logical subframes when the second access technology is applied within the system frame period;
the SCI sent by applying the second access technology is received in the subframe m, a module applying the first access technology is configured or pre-configured with full sensing, $P_{LTE\_rsvp\_RX}$ < 1, and n'-m ≤ $P_{step}$*$P_{LTE\_rsvp\_RX}$; wherein in response to a slot n being comprised in $\left( t'^{SL}_0, t'^{SL}_1, \ldots, t'^{SL}_{T'_{max}-1} \right)$, n' corresponds to a same slot as n, and in response to the slot n not being comprised in $\left( t'^{SL}_0, t'^{SL}_1, \ldots, t'^{SL}_{T'_{max}-1} \right)$, n' is a first slot after the slot n in $\left( t'^{SL}_0, t'^{SL}_1, \ldots, t'^{SL}_{T'_{max}-1} \right)$ within the system frame period, wherein

$\left(t'^{SL}_0, t'^{SL}_1, \ldots, t'^{SL}_{T'_{max}-1}\right)$ denotes slots in a resource pool when the first access technology is applied within the system frame period; or

the SCI sent by applying the second access technology is received in the subframe m, a module applying the first access technology is configured or pre-configured with partial sensing, $P_{LTE\_rsvp\_RX} < 1$, and $n'$ - m $\leq P_{step}$ * $P_{LTE\_rsvp\_RX} + P_{step}$; wherein $P_{step}$ denotes a system-configured, pre-configured or pre-defined parameter when the second access technology is applied, and n' is a last subframe among subframes consisting of $Y$ and $Y'$, wherein the subframes consisting of $Y$ and $Y'$ are part subframes within the resource selection window.

8. The method of any one of claims 1 to 5, wherein in response to a second preset condition being met, a number Q of resources comprised in the fourth resource set is determined by $k$; and in response to the second preset condition not being met, Q = 1; wherein $k$ denotes all available periodically reserved values in a resource pool configured by a system applying the second access technology or all available periodically reserved values in a pre-configured resource pool.

9. The method of claim 8, wherein the second preset condition comprises:

no monitoring is performed in a subframe m, a module applying the first access technology is configured or pre-configured with full sensing, $k < 1$, and n' - m $\leq P_{step} * k$; wherein in response to a slot n being comprised in $\left(t^{SL}_{LTE\_0}, t^{SL}_{LTE\_1}, \ldots, t^{SL}_{LTE\_T_{max}}\right)$, n' corresponds to a same logical subframe as n, and in response to the slot n not being comprised in $\left(t^{SL}_{LTE\_0}, t^{SL}_{LTE\_1}, \ldots, t^{SL}_{LTE\_T_{max}}\right)$, n' is a first logical subframe after the slot n in $\left(t^{SL}_{LTE\_0}, t^{SL}_{LTE\_1}, \ldots, t^{SL}_{LTE\_T_{max}}\right)$ within a system frame period, wherein $\left(t^{SL}_{LTE\_0}, t^{SL}_{LTE\_1}, \ldots, t^{SL}_{LTE\_T_{max}}\right)$ denotes logical subframes when the second access technology is applied within the system frame period;

no monitoring is performed in a subframe m, a module applying the first access technology is configured or pre-configured with full sensing, k < 1, and n' - m $\leq P_{step} * k$; wherein in response to a slot $n$ being comprised in $\left(t'^{SL}_0, t'^{SL}_1, \ldots, t'^{SL}_{T'_{max}-1}\right)$, n' corresponds to a same slot as n, and in response to the slot n not being comprised in $\left(t'^{SL}_0, t'^{SL}_1, \ldots, t'^{SL}_{T'_{max}-1}\right)$, n' is a first slot after the slot n in $\left(t'^{SL}_0, t'^{SL}_1, \ldots, t'^{SL}_{T'_{max}-1}\right)$ within a system frame period, wherein $\left(t'^{SL}_0, t'^{SL}_1, \ldots, t'^{SL}_{T'_{max}-1}\right)$ denotes slots in a resource pool when the first access technology is applied within the system frame period;

no monitoring is performed in a subframe m, a module applying the first access technology is configured or pre-configured with partial sensing, $k < 1$, and n' - m $\leq P_{step} * k + P_{step}$; wherein n' is a last subframe among subframes consisting of $Y$ and $Y'$, wherein the subframes consisting of $Y$ and $Y'$ are part subframes within the resource selection window; $P_{step}$ denotes a system-configured, pre-configured or pre-defined parameter when the second access technology is applied; m denotes a logical subframe index within a system frame period for a subframe of received data used by the second access technology; in response to a slot n being comprised in $\left(t^{SL}_{LTE\_0}, t^{SL}_{LTE\_1}, \ldots, t^{SL}_{LTE\_T_{max}}\right)$, n' corresponds to a same logical subframe as $n$, and in response to the slot n not being comprised in $\left(t^{SL}_{LTE\_0}, t^{SL}_{LTE\_1}, \ldots, t^{SL}_{LTE\_T_{max}}\right)$, n' is a first logical subframe after the slot n in $\left(t^{SL}_{LTE\_0}, t^{SL}_{LTE\_1}, \ldots, t^{SL}_{LTE\_T_{max}}\right)$ within the system frame period, wherein $\left(t^{SL}_{LTE\_0}, t^{SL}_{LTE\_1}, \ldots, t^{SL}_{LTE\_T_{max}}\right)$ denotes logical subframes when the second access technology is applied within the system frame period; or

no monitoring is performed in a subframe m, a module applying the first access technology is configured or pre-configured with partial sensing, $k < 1$, and n' - m $\leq P_{step} * k + P_{step}$; wherein n' is a last subframe among subframes consisting of $Y$ and $Y'$, wherein the subframes consisting of $Y$ and $Y'$ are part subframes within the resource selection window; $P_{step}$ denotes a system-configured, pre-configured or pre-defined parameter when the second access technology is applied; m denotes a logical subframe index within a system frame period for a subframe of received data used by the second access technology; in response to a slot n being comprised in $\left(t'^{SL}_0, t'^{SL}_1, \ldots, t'^{SL}_{T'_{max}-1}\right)$, n' corresponds to a same slot as n, and in response to the slot n not being comprised in $\left(t'^{SL}_0, t'^{SL}_1, \ldots, t'^{SL}_{T'_{max}-1}\right)$, n' is a first slot after the slot n in $\left(t'^{SL}_0, t'^{SL}_1, \ldots, t'^{SL}_{T'_{max}-1}\right)$ within the system frame period, wherein $\left(t'^{SL}_0, t'^{SL}_1, \ldots, t'^{SL}_{T'_{max}-1}\right)$ denotes slots in a resource pool when the first access technology is applied within the system frame period.

10. The method of claim 1, wherein in response to a third preset condition being met, a number Q of resources comprised in the fourth resource set is determined by $P_{LTE\_rsvp\_RX}$ and $T_{scal}$; and in response to the third preset condition not being met, Q = 1; wherein $P_{LTE\_rsvp\_RX}$ denotes a value of a resource periodic reservation field indicated in SCI sent by applying the second access technology and received in a subframe m, wherein m denotes a logical subframe index within a system frame period for a subframe of received data used by the second access technology; and $T_{scal}$ denotes a millisecond value corresponding to a resource selection window size.

11. The method of claim 10, wherein the third preset condition comprises:

SCI sent by applying the first access technology is received in the subframe m, 100 * $P_{LTE\_rsvp\_RX}$ < $T_{scal}$, and $n' - m \leq P'_{rsvp\_RX}$; wherein $P'_{rsvp\_RX}$ denotes a value of a logical slot corresponding to a module applying the first access technology, converted from a period corresponding to a value indicated by a resource reservation field in the SCI sent by applying the second access technology and received in the subframe m; in response to a slot n being comprised in $\left(t^{SL}_{LTE\_0}, t^{SL}_{LTE\_1}, \ldots, t^{SL}_{LTE\_T_{max}}\right)$, n' corresponds to a same logical subframe as n, and in response to the slot n not being comprised in $\left(t^{SL}_{LTE\_0}, t^{SL}_{LTE\_1}, \ldots, t^{SL}_{LTE\_T_{max}}\right)$, n' is a first logical subframe after the slot n in $\left(t^{SL}_{LTE\_0}, t^{SL}_{LTE\_1}, \ldots, t^{SL}_{LTE\_T_{max}}\right)$ within the system frame period, wherein $\left(t^{SL}_{LTE\_0}, t^{SL}_{LTE\_1}, \ldots, t^{SL}_{LTE\_T_{max}}\right)$ denotes logical subframes when the second access technology is applied within the system frame period; or
SCI sent by applying the first access technology is received in the subframe m, 100 * $P_{LTE\_rsvp\_RX}$ < $T_{scal}$, and $n' - m \leq P'_{rsvp\_RX}$; wherein $P'_{rsvp\_RX}$ denotes a value of a logical slot corresponding to a module applying the first access technology, converted from a period corresponding to a value indicated by a resource reservation field in the SCI sent by applying the second access technology and received in the subframe m; in response to a slot n being comprised in $\left(t'^{SL}_0, t'^{SL}_1, \ldots, t'^{SL}_{T'_{max}-1}\right)$, n' corresponds to a same slot as n; and in response to the slot n not being comprised in $\left(t'^{SL}_0, t'^{SL}_1, \ldots, t'^{SL}_{T'_{max}-1}\right)$, n' is a first slot after the slot n in $\left(t'^{SL}_0, t'^{SL}_1, \ldots, t'^{SL}_{T'_{max}-1}\right)$ within the system frame period, wherein $\left(t'^{SL}_0, t'^{SL}_1, \ldots, t'^{SL}_{T'_{max}-1}\right)$ denotes slots in a resource pool when the first access technology is applied within the system frame period.

12. The method of claim 1, wherein in response to a fourth preset condition being met, a number Q of resources comprised in the fourth resource set is determined by K and $T_{scal}$; and in response to the fourth preset condition not being met, Q = 1; wherein K denotes all available periodically reserved values in a resource pool configured by a hypothetical system applying the second access technology or a pre-configured resource pool in an unmonitored subframe m.

13. The method of claim 12, wherein the fourth preset condition comprises:

no monitoring is performed in the subframe m, 100 * K < $T_{scal}$, and $n' - m \leq P'_{rsvp\_RX}$; wherein K denotes all the available periodically reserved values in the resource pool configured by the hypothetical system applying the second access technology or the pre-configured resource pool in the unmonitored subframe m; $P'_{rsvp\_RX}$ denotes a value of a logical slot corresponding to a module applying the first access technology, converted from a period corresponding to a periodically reserved value in the system applying the second access technology; in response to a slot n being comprised in $\left(t'^{SL}_0, t'^{SL}_1, \ldots, t'^{SL}_{T'_{max}-1}\right)$, n' corresponds to a same slot as n; and in response to the slot n not being comprised in $\left(t'^{SL}_0, t'^{SL}_1, \ldots, t'^{SL}_{T'_{max}-1}\right)$, n' is a first slot after the slot n in $\left(t_0'^{SL}, t_1'^{SL}, \ldots, t_{T'_{max}-1}'^{SL}\right)$ within a system frame period, wherein $\left(t_0'^{SL}, t_1'^{SL}, \ldots, t_{T'_{max}-1}'^{SL}\right)$ denotes slots in a resource pool when the first access technology is applied within the system frame period; or

no monitoring is performed in the subframe m, $100 * K < T_{scal}$, and $n' - m \leq P'_{rsvp\_RX}$ ; wherein $K$ denotes all the available periodically reserved values in the resource pool configured by the hypothetical system applying the second access technology or the pre-configured resource pool in the unmonitored subframe m; $P'_{rsvp\_RX}$ denotes a value of a logical slot corresponding to a module applying the first access technology, converted from a period corresponding to a periodically reserved value in the system applying the second access technology; in response to a slot n being comprised in $\left(t_{LTE\_0}^{SL}, t_{LTE\_1}^{SL}, \ldots, t_{LTE\_T_{max}}^{SL}\right)$ , n' corresponds to a same logical subframe as n, and in response to the slot n not being comprised in $\left(t_{LTE\_0}^{SL}, t_{LTE\_1}^{SL}, \ldots, t_{LTE\_T_{max}}^{SL}\right)$, n' is a first logical subframe after the slot n in $\left(t_{LTE\_0}^{SL}, t_{LTE\_1}^{SL}, \ldots, t_{LTE\_T_{max}}^{SL}\right)$ within a system frame period, wherein $\left(t_{LTE\_0}^{SL}, t_{LTE\_1}^{SL}, \ldots, t_{LTE\_T_{max}}^{SL}\right)$ denotes logical subframes when the second access technology is applied within the system frame period.

14. The method of claim 1, wherein in response to a fifth preset condition being met, a number Q of resources comprised in the fourth resource set is determined by $P_{LTE\_rsvp\_RX}$, $T_{scal}$, and a first preset value; and in response to the fifth preset condition not being met, Q = 1;
wherein $P_{LTE\_rsvp\_RX}$ denotes a value of a resource periodic reservation field indicated in SCI sent by applying the second access technology and received in a subframe m, wherein m denotes a logical subframe index within a system frame period for a subframe of received data used by the second access technology; and $T_{scal}$ denotes a millisecond value corresponding to a resource selection window size.

15. The method of claim 14, wherein the fifth preset condition comprises:

SCI sent by applying the second access technology is received in the subframe m, $100 * P_{LTE\_rsvp\_RX} < max(100$ ms, $T_{scal})$ , and $n' - m \leq P'_{rsvp\_RX}$ ; wherein $P_{LTE\_rsvp\_RX}$ denotes a value corresponding to a resource periodic reservation field in the SCI sent by applying the second access technology and received in the subframe m; $P'_{rsvp\_RX}$ denotes a value of a logical slot corresponding to a module applying the first access technology, converted from a period corresponding to a value indicated by a resource reservation field in the SCI; in response to a slot n being comprised in $\left(t_0'^{SL}, t_1'^{SL}, \ldots, t_{T'_{max}-1}'^{SL}\right)$, n' corresponds to a same slot as n, and in response to the slot n not being comprised in $\left(t_0'^{SL}, t_1'^{SL}, \ldots, t_{T'_{max}-1}'^{SL}\right)$ , n' is a first slot after the slot n in $\left(t_0'^{SL}, t_1'^{SL}, \ldots, t_{T'_{max}-1}'^{SL}\right)$ within the system frame period, wherein $\left(t_0'^{SL}, t_1'^{SL}, \ldots, t_{T'_{max}-1}'^{SL}\right)$ denotes slots in a resource pool when the first access technology is applied within the system frame period; or
SCI sent by applying the second access technology is received in the subframe m, $100 * P_{LTE\_rsvp\_RX} < max$ $(100ms, T_{scal})$, and $n' - m \leq P'_{rsvp\_RX}$ ; wherein $P_{LTE\_rsvp\_RX}$ denotes a value corresponding to a resource periodic reservation field in the SCI sent by applying the second access technology and received in the subframe m; $P'_{rsvp\_RX}$ denotes a value of a logical slot corresponding to a module applying the first access technology, converted from a period corresponding to a value indicated by a resource reservation field in the SCI; in response to a slot n being comprised in $\left(t_{LTE\_0}^{SL}, t_{LTE\_1}^{SL}, \ldots, t_{LTE\_T_{max}}^{SL}\right)$, n corresponds to a same logical subframe as n, and in response to the slot n not being comprised in $\left(t_{LTE\_0}^{SL}, t_{LTE\_1}^{SL}, \ldots, t_{LTE\_T_{max}}^{SL}\right)$, n' is a first logical subframe after the slot n in $\left(t_{LTE\_0}^{SL}, t_{LTE\_1}^{SL}, \ldots, t_{LTE\_T_{max}}^{SL}\right)$ within the system frame period, wherein $\left(t_{LTE\_0}^{SL}, t_{LTE\_1}^{SL}, \ldots, t_{LTE\_T_{max}}^{SL}\right)$ denotes logical subframes when the second access technology is applied within the system frame period.

**16.** The method of claim 1, wherein in response to a sixth preset condition being met, a number Q of resources comprised in the fourth resource set is determined by $K$, $T_{scal}$, and a first preset value; and in response to the sixth preset condition not being met, Q = 1; wherein K denotes all available periodically reserved values in a resource pool configured by a hypothetical system applying the second access technology or a pre-configured resource pool in an unmonitored subframe m.

**17.** The method of claim 16, wherein the sixth preset condition comprises:

no monitoring is performed in the subframe m, 100 $_*$ K < max(100 ms, $T_{scal}$), and $n' - m \leq P'_{rsvp\_RX}$ ; wherein $K$ denotes all the available periodically reserved values in the resource pool configured by the hypothetical system applying the second access technology or the pre-configured resource pool in the unmonitored subframe m; $P'_{rsvp\_RX}$ denotes a value of a logical slot corresponding to a module applying the first access technology, converted from a period corresponding to a periodically reserved value in the system applying the second access technology; in response to a slot n being comprised in $\left(t'^{SL}_0, t'^{SL}_1, \ldots, t'^{SL}_{T'_{max}-1}\right)$ , n' corresponds to a same slot as n, and in response to the slot n not being comprised in $\left(t'^{SL}_0, t'^{SL}_1, \ldots, t'^{SL}_{T'_{max}-1}\right)$ , n' is a first slot after the slot n in $\left(t'^{SL}_0, t'^{SL}_1, \ldots, t'^{SL}_{T'_{max}-1}\right)$ within a system frame period, wherein $\left(t'^{SL}_0, t'^{SL}_1, \ldots, t'^{SL}_{T'_{max}-1}\right)$ denotes slots in a resource pool when the first access technology is applied within the system frame period; or

no monitoring is performed in the subframe m, 100 $_*$ K < max(100 ms, $T_{scal}$), and $n' - m \leq P'_{rsvp\_RX}$ ; wherein $K$ denotes all the available periodically reserved values in the resource pool configured by the hypothetical system applying the second access technology or the pre-configured resource pool in the unmonitored subframe m; $P'_{rsvp\_RX}$ denotes a value of a logical slot corresponding to a module applying the first access technology, converted from a period corresponding to a periodically reserved value in the system applying the second access technology; in response to a slot n being comprised in $\left(t^{SL}_{LTE\_0}, t^{SL}_{LTE\_1}, \ldots, t^{SL}_{LTE\_T_{max}}\right)$ , n' corresponds to a same logical subframe as n, and in response to the slot n not being comprised in $\left(t^{SL}_{LTE\_0}, t^{SL}_{LTE\_1}, \ldots, t^{SL}_{LTE\_T_{max}}\right)$ , n' is a first logical subframe after the slot n in $\left(t^{SL}_{LTE\_0}, t^{SL}_{LTE\_1}, \ldots, t^{SL}_{LTE\_T_{max}}\right)$ within a system frame period, wherein $\left(t^{SL}_{LTE\_0}, t^{SL}_{LTE\_1}, \ldots, t^{SL}_{LTE\_T_{max}}\right)$ denotes logical subframes when the second access technology is applied within the system frame period.

**18.** The method of any one of claims 10 to 17, wherein in response to the module applying the first access technology being configured with full sensing, $T_{scal}$ is determined by a length of the resource selection window; and
in response to the module applying the first access technology being configured with partial sensing, $T_{scal} = t'^{SL}_{y_L} - (t'^{SL}_{y_i} - T^{SL}_{proc,1})$ ; wherein $t'^{SL}_{y_L}$ is a last slot among candidate slots consisting of Y and Y', $t'^{SL}_{y_i}$ is a first slot in a selected set or remaining set among the candidate slots consisting of Y and Y', and $T^{SL}_{proc,1}$ is a specific device processing time.

**19.** The method of claim 7, 11 or 15, wherein the SCI sent by applying the second access technology is received in one of the following manners: the SCI sent by applying the second access technology is received through the module applying the first access technology or the SCI sent by applying the second access technology is received through a module applying the second access technology.

**20.** A communication device, comprising a memory and at least one processor; wherein

the memory is configured to store at least one program; and
when executed by the at least one processor, the at least one program causes the at least one processor to perform the method of any one of claims 1 to 19.

21. A storage medium storing a computer program which, when executed by a processor, causes the processor to perform the method of any one of claims 1 to 19.

Base station

SL communication

SL communication

UE1                                                        UE2

SL resource pool

**FIG. 1**

n-t4

SCI

n-t3  n  n+T1              n+T2

SCI

Resource sensing window

Resource selection window

**FIG. 2**

Determine a resource conflict condition between a second resource set corresponding to each candidate transmission resource in a first resource set and a fourth resource set corresponding to each sensing resource in a third resource set

S310

Exclude a candidate transmission resource from the first resource set according to the resource conflict condition

S320

**FIG. 3**

Resource determination apparatus

410

420

| Determination module | | Screening module |

**FIG. 4**

Communication device

520

Memory

Processor

510

**FIG. 5**

## INTERNATIONAL SEARCH REPORT

| | International application No. |
|---|---|
| | **PCT/CN2024/083913** |

**A.   CLASSIFICATION OF SUBJECT MATTER**

H04W 72/40(2023.01)i

According to International Patent Classification (IPC) or to both national classification and IPC

**B.   FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, ENTXTC, 3GPP, CNKI: 窗, 第二, 第一, 接入技术, 通信模块, 通信模组, 感测, 感知, 监听, 侦听, 数量, 选择, 预设条件, 周期, 资源, lte, nr, rat, select+, sens, window, second, first, access technology, communication module, quantity, preset condition, period, resource

**C.   DOCUMENTS CONSIDERED TO BE RELEVANT**

| Category* | Citation of document, with indication, where appropriate, of the relevant passages | Relevant to claim No. |
|---|---|---|
| PX | CN 116489717 A (SPREADTRUM COMMUNICATIONS (SHANGHAI) CO., LTD.) 25 July 2023 (2023-07-25)<br>    description, paragraphs [0081]-[0159], and figures 1-6 | 1-5, 20, 21 |
| PX | CN 117098229 A (XI'AN UNISOC TECHNOLOGY CO., LTD.) 21 November 2023 (2023-11-21)<br>    description, paragraphs [0106]-[0120], and figure 4 | 1-5, 20, 21 |
| X | CN 115024004 A (BEIJING XIAOMI MOBILE SOFTWARE CO., LTD.) 06 September 2022 (2022-09-06)<br>    description, paragraphs [0121]-[0138], and figure 3 | 1-5, 20, 21 |
| A | CN 115024004 A (BEIJING XIAOMI MOBILE SOFTWARE CO., LTD.) 06 September 2022 (2022-09-06)<br>    description, paragraphs [0121]-[0138], and figure 3 | 6-19 |
| X | CN 115174013 A (CHINA ACADEMY OF INFORMATION AND COMMUNICATIONS TECHNOLOGY) 11 October 2022 (2022-10-11)<br>    description, paragraphs [0046]-[0054], and figures 2a-2b | 1-5, 20, 21 |

☑ Further documents are listed in the continuation of Box C.   ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **08 May 2024** | **15 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/083913**

| C. | DOCUMENTS CONSIDERED TO BE RELEVANT | |
|---|---|---|
| Category* | Citation of document, with indication, where appropriate, of the relevant passages | Relevant to claim No. |
| X | CN 115767466 A (HUAWEI TECHNOLOGIES CO., LTD.) 07 March 2023 (2023-03-07) description, paragraphs [0114]-[0200] | 1-5, 20, 21 |
| X | CN 115843109 A (CITIC KEZHILIAN TECHNOLOGY CO., LTD.) 24 March 2023 (2023-03-24) claims 1-13 | 1-5, 20, 21 |

Form PCT/ISA/210 (second sheet) (July 2022)

**INTERNATIONAL SEARCH REPORT**
Information on patent family members

| International application No. |
| --- |
| **PCT/CN2024/083913** |

| Patent document cited in search report | | | Publication date (day/month/year) | Patent family member(s) | Publication date (day/month/year) |
| --- | --- | --- | --- | --- | --- |
| CN | 116489717 | A | 25 July 2023 | None | |
| CN | 117098229 | A | 21 November 2023 | None | |
| CN | 115024004 | A | 06 September 2022 | None | |
| CN | 115174013 | A | 11 October 2022 | None | |
| CN | 115767466 | A | 07 March 2023 | None | |
| CN | 115843109 | A | 24 March 2023 | None | |

Form PCT/ISA/210 (patent family annex) (July 2022)